(19) Europäisches Patentamt
European Patent Office
Office européen des brevets

(11) **EP 4 604 537 A1**

(12) **EUROPEAN PATENT APPLICATION**
published in accordance with Art. 153(4) EPC

(43) Date of publication:
**20.08.2025 Bulletin 2025/34**

(21) Application number: 23877701.5

(22) Date of filing: **12.10.2023**

(51) International Patent Classification (IPC):
*H04N 19/587* (2014.01)   *H04N 19/105* (2014.01)
*H04N 19/70* (2014.01)   *H04N 19/146* (2014.01)
*H04N 19/117* (2014.01)

(52) Cooperative Patent Classification (CPC):
**H04N 19/105; H04N 19/117; H04N 19/146;**
**H04N 19/587; H04N 19/70**

(86) International application number:
**PCT/KR2023/015713**

(87) International publication number:
**WO 2024/080778 (18.04.2024 Gazette 2024/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.10.2022   US 202263415627 P**

(71) Applicant: **LG Electronics Inc.**
**Yeongdeungpo-gu**
**Seoul 07336 (KR)**

(72) Inventors:
• **NAM, Jung Hak**
**Seoul 06772 (KR)**
• **LIM, Jaehyun**
**Seoul 06772 (KR)**
• **YOO, Sunmi**
**Seoul 06772 (KR)**
• **KIM, Seung Hwan**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD AND DEVICE FOR ADAPTIVELY CHANGING RESOLUTION, AND METHOD FOR TRANSMITTING BITSTREAM**

(57)   **Abstract:** An image encoding/decoding method and device are provided. The image decoding method performed by the image decoding device, according to one embodiment of the present disclosure, may comprise the steps of: deriving a reference picture for the current picture; deriving resolution information for the reference picture and current picture; and resampling the reference picture, for the current picture, on the basis of the resolution information.

FIG. 9

```
                    ┌─────────┐
                    │  Start  │
                    └────┬────┘
                         │                        S901
         ┌───────────────▼───────────────────────┐
         │    Compare resolution of current image │
         │      with resolution of original image │
         └───────────────┬───────────────────────┘
                         │                        S902
         ┌───────────────▼───────────────────────┐
         │ Derive resolution ratio of current image and original image │
         └───────────────┬───────────────────────┘
                         │                        S903
         ┌───────────────▼───────────────────────┐
         │ Derive filter for current image based on the resolution ratio │
         └───────────────┬───────────────────────┘
                         │                        S904
         ┌───────────────▼───────────────────────┐
         │ Change resolution by performing filtering on current image │
         └───────────────┬───────────────────────┘
                         │
                    ┌────▼────┐
                    │   End   │
                    └─────────┘
```

**Description**

[Technical Field]

The present disclosure relates to an image encoding/decoding method and apparatus, and more particularly, to an image encoding/decoding method and apparatus for adaptively changing resolution when resolutions of a reference image and a current image are different, and a method of transmitting a bitstream generated by the encoding method/apparatus of the present disclosure.

[Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

[Disclosure]

[Technical Problem]

An object of the present disclosure is to provide an image encoding/decoding method and apparatus with improved encoding/decoding efficiency.

Another object of the present disclosure is to provide an image encoding/decoding method and apparatus for adaptively changing resolution.

Another object of the present disclosure is to provide an image encoding/decoding method and apparatus for performing reference image resampling.

Another object of the present disclosure is to provide an image encoding/decoding method and apparatus for selecting one of various candidate resolutions for an image.

Another object of the present disclosure is to provide a method or apparatus for transmitting a bitstream generated by an image encoding method or apparatus according to the present disclosure.

Another object of the present disclosure is to provide a recording medium storing a bitstream generated by an image encoding method or apparatus according to the present disclosure.

Another object of the present disclosure is to provide a recording medium storing a bitstream that is received by an image decoding apparatus according to the present disclosure, decoded, and used for reconstruction of an image.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

According to one embodiment of the present disclosure, provided herein is an image decoding method performed by an image decoding apparatus. The method may include deriving a reference picture for a current picture, deriving resolution information about the reference picture and the current picture, and performing resampling of the reference picture for the current picture based on the resolution information.

According to another embodiment of the present disclosure, provided herein is an image encoding method performed by an image encoding apparatus. The method may include determining a reference picture for a current picture, determining resolution information about the reference picture and the current picture, and performing resampling of the reference picture for the current picture based on the resolution information.

According to another embodiment of the present disclosure, provided herein is a method of transmitting a bitstream. The method may include transmitting a bitstream generated by the image encoding method. The image encoding method may include determining a reference picture for a current picture, determining resolution information about the reference picture and the current picture, and performing resampling of the reference picture for the current picture based on the resolution information.

According to another embodiment of the present disclosure, a bitstream generated by the video encoding apparatus or the video encoding method may be transmitted.

According to another embodiment of the present disclosure, a bitstream generated by the image encoding method may be stored or recorded in a computer-readable medium.

According to another embodiment of the present disclosure, the bitstream generated by the image encoding method may be transmitted by a bitstream transmission apparatus.

The features of the present disclosure briefly summarized above are merely exemplary aspects described in the following detailed description and are not intended to limit the scope of the present disclosure.

[Advantageous Effects]

According to the present disclosure, there may be provided an image encoding/decoding method and apparatus with improved encoding/decoding efficiency.

Further, according to the disclosure, there may be provided an image encoding/decoding method and apparatus for adaptively changing resolution.

Further, according to the disclosure, there may be provided an image encoding/decoding method and apparatus for performing reference image resampling.

Further, according to the disclosure, there may be provided an image encoding/decoding method and apparatus for determining optimal resolution.

Further, according to the disclosure, there may be provided an image encoding/decoding method and apparatus for selecting one of various candidate resolutions for an image.

Further, according to the present disclosure, there may be provided a method or apparatus for transmitting a bitstream generated by an image encoding method or apparatus according to the present disclosure.

Further, according to the present disclosure, there may be provided a recording medium storing a bitstream generated by an image encoding method or apparatus according to the present disclosure.

Further, according to the present disclosure, there may be provided a recording medium storing a bitstream that is received by an image decoding apparatus according to the present disclosure, decoded, and used for reconstruction of an image.

The effects obtainable in the present disclosure are not limited to the above-mentioned effects, and other effects not mentioned may be clearly understood by those of ordinary skill in the art from the following description.

[Brief Description of the Drawings]

FIG. 1 is a diagram schematically illustrating a video coding system to which an embodiment of the present disclosure is applicable.

FIG. 2 is a diagram schematically illustrating an image encoding apparatus to which an embodiment of the present disclosure is applicable.

FIG. 3 is a diagram schematically illustrating an image decoding apparatus to which an embodiment of the present disclosure is applicable.

FIGS. 4 to 8 illustrate an inter-predictive encoding/decoding procedure in general.

FIG. 9 illustrates an image coding method using image filtering according to one embodiment of the present disclosure.

FIG. 10 illustrates an image decoding method according to one embodiment of the present disclosure.

FIG. 11 illustrates an image encoding method according to one embodiment of the present disclosure.

FIG. 12 is a diagram illustrating a content streaming system to which embodiments of the present disclosure are applicable.

[Mode for Disclosure]

Hereinafter, embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block." When prediction is performed, "current block" may mean "current prediction block" or "prediction target block." When transform (inverse transform)/quantization (dequantization) is performed, "current block" may mean "current transform block" or "transform target block." When filtering is performed, "current block" may mean "filtering target block."

In addition, in the present disclosure, a "current block" may mean a block including both a luma component block and a chroma component block or "a luma block of a current block" unless explicitly stated as a chroma block. The "chroma block of the current block" may be expressed by including an explicit description of a chroma block, such as "chroma block" or "current chroma block."

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

## Overview of video coding system

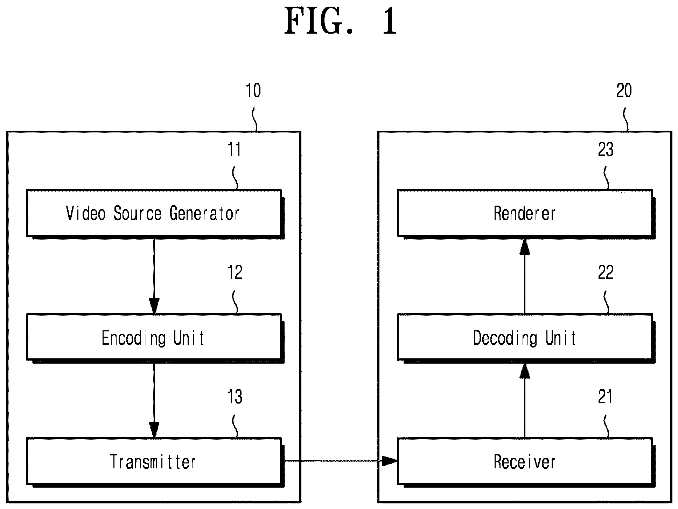

FIG. 1 is a diagram schematically illustrating a video coding system according to the present disclosure.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit (encoder) 12 and a transmitter 13. The decoding apparatus 20 according to an embodiment may include a receiver 21, a decoding unit (decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/-

image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 10, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

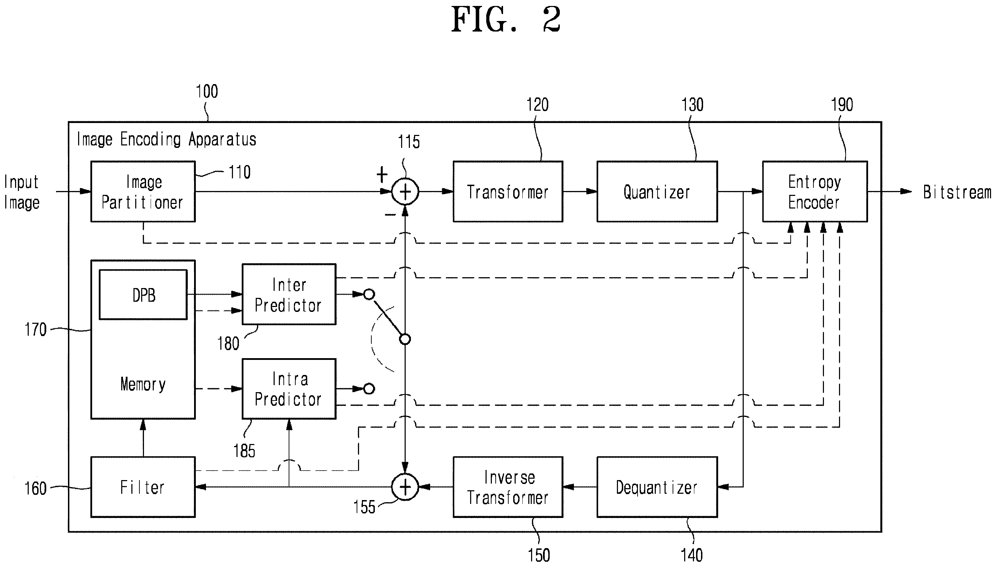

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185 and an entropy encoder 190. The inter predictor 180 and the intra predictor 185 may be collectively referred to as a "predictor". The transformer 120, the quantizer 130, the dequantizer 140 and the inverse transformer 150 may be included in a residual processor. The residual processor may further include the subtractor 115.

All or at least some of the plurality of components constituting the image encoding apparatus 100 may be implemented as one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The predictor (the inter predictor 180 or the intra predictor 185) may perform prediction on a block to be processed (current block) and generate a predicted block including prediction samples for the current block. The predictor may determine whether intra prediction or inter prediction is applied on a current block or CU basis. The predictor may generate various kinds of information related to prediction of the current block and transmit the generated information to the entropy encoder 190. The information on the prediction may be encoded by the entropy encoder 190 and output in the form of a bitstream.

The intra predictor 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra predictor 185 may determine the prediction mode applied to the current block by using a prediction mode applied to a neighboring block.

The inter predictor 180 may derive a predicted block for the current block based on a reference block (reference sample array) specified by a motion vector on a reference image. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference image index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference image. The reference image including the reference block and the reference image including the temporal neighboring block may be the same or different. The temporal neighboring block may be called a collocated reference block, a co-located CU (colCU), and the like. The reference image including the temporal neighboring block may be called a collocated picture (colPic). For example, the inter predictor 180 may construct a motion information candidate list based on neighboring blocks and generate information indicating which candidate is used to derive a motion vector and/or a reference image index of the current block. Inter prediction may be performed based on various prediction modes. For example, in the case of a skip mode and a merge mode, the inter predictor 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The predictor may generate a prediction signal based on various prediction methods and prediction techniques described below. For example, the predictor may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the predictor may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the predictor may be used to generate a reconstructed signal or to generate a residual signal. The subtractor 115 may generate a residual signal (residual block or residual sample array) by subtracting the prediction signal (predicted block or prediction sample array) output from the predictor from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all earlier reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter predictor 180 or the intra predictor 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference image in the inter predictor 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference image in the inter predictor 180. The memory 170 may store the motion information of the block from which the motion information in the current picture is derived (or encoded) and/or the motion information of the blocks in the picture that have already been reconstructed. The stored motion information may be transmitted to the inter predictor 180 and used as the motion information of the spatial neighboring block or the motion information of the temporal neighboring block. The memory 170 may store reconstructed samples of reconstructed blocks in the current picture and may transfer the reconstructed samples to the intra predictor 185.

**Overview of image decoding apparatus**

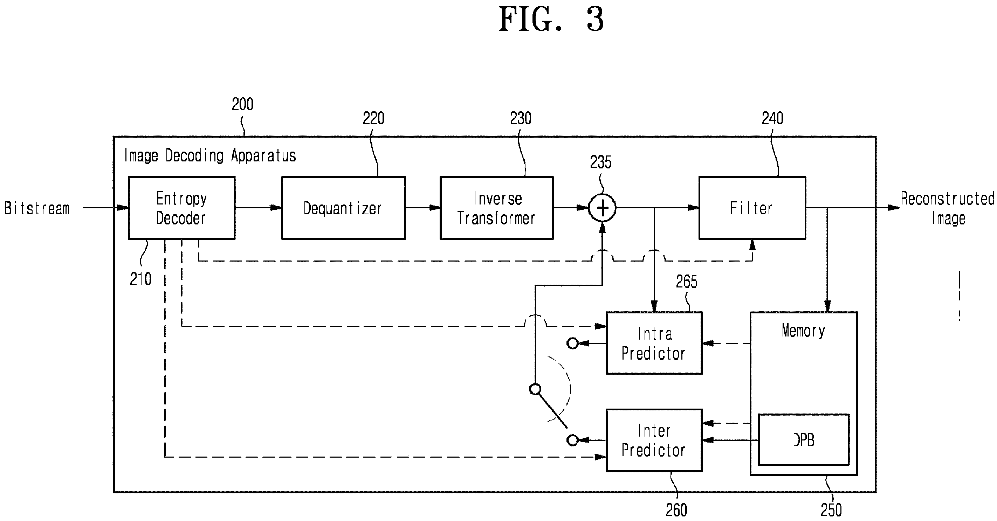

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter predictor 260 and an intra predictor 265. The inter predictor 260 and the intra predictor 265 may be collectively referred to as a "predictor." The dequantizer 220 and the inverse transformer 230 may be included in a residual processor.

All or at least some of a plurality of components constituting the image decoding apparatus 200 may be implemented as a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied by the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the predictor (the inter predictor 260 and the intra predictor 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. A receiver (not shown) for receiving a signal output from the image encoding apparatus may be further configured as an internal/external element of the image decoding apparatus 200, or the receiver may be a component of the entropy decoder 210.

The image decoding apparatus according to the present disclosure may be referred to as a video/image/picture decoding apparatus. The image decoding apparatus include an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter predictor 260 or the intra predictor 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the order of coefficient scanning performed by the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The predictor may perform prediction on the current block and generate a predicted block including prediction samples for the current block. The predictor may determine whether intra prediction or inter prediction is applied to the current block based on the information on the prediction output from the entropy decoder 210 and may determine a specific intra/inter prediction mode (prediction technique).

It is the same as described regarding the predictor of the image encoding apparatus 100 that the predictor may generate the prediction signal based on various prediction methods (techniques), which will be described later.

The intra predictor 265 may predict the current block by referring to the samples in the current picture. The description of the intra predictor 185 is equally applied to the intra predictor 265.

The inter predictor 260 may derive a predicted block for the current block based on a reference block (reference sample array) specified by a motion vector on a reference image. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference image index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference image. For example, the inter predictor 260 may configure a motion information candidate list based on neighboring blocks and derive a motion vector of the current block and/or a reference image index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference image in the inter predictor 260. The memory 250 may store the motion information of the block from which the motion information in the current picture is derived (or decoded) and/or the motion information of the blocks in the picture that have already been reconstructed. The stored motion information may be transmitted to the inter predictor 260 so as to be utilized as the motion information of the spatial neighboring block or the motion information of the temporal neighboring block. The memory 250 may store reconstructed samples of reconstructed blocks in the current picture and transfer the reconstructed samples to the intra predictor 265.

In the present disclosure, the embodiments described regarding the filter 160, the inter predictor 180, and the intra predictor 185 of the image encoding apparatus 100 may be equally or correspondingly applied to the filter 240, the inter predictor 260, and the intra predictor 265 of the image decoding apparatus 200.

## Overview of Partitioning of CTU

As described above, a coding unit may be acquired by recursively partitioning a coding tree unit (CTU) or a largest coding unit (LCU) according to a quad-tree/binary-tree/ternary-tree (QT/BT/TT) structure. For example, a CTU may first be partitioned into a QT structure. The leaf nodes in the QT structure may then be further partitioned by a multi-type tree structure.

Partitioning according to a QT means partitioning the current CU (or CTU) into quarters. By partitioning according to a QT, the current CU may be partitioned into four CUs of equal width and equal height. When the current CU is no longer partitioned in a QT structure, the current CU corresponds to a leaf node in the QT structure. The CU corresponding to the leaf node in the QT structure is no longer partitioned and may be used as the final CU as described above. Alternatively, the CU corresponding to the leaf node in the QT structure may be further partitioned by a multi-type tree structure.

## Overview of Inter-prediction

Hereinafter, inter-prediction according to the present disclosure will be described.

The following inter-prediction may be represented by an inter predictor within the video/image decoding method and decoding apparatus based on inter-prediction on the decoder side as described above. Further, the encoder may be represented by an inter predictor within the video/image encoding method and encoding apparatus based on inter-prediction as described above. Furthermore, the encoded data may be stored in the form of a bitstream.

The predictor of the encoding apparatus /decoding apparatus may perform inter-prediction on a block-by-block basis to derive prediction samples. Inter-prediction can be a prediction derived in a manner that is dependent on data elements (e.g., sample values or motion information) of picture(s) other than the current picture. When inter-prediction is applied to a current block, a predicted block (i.e., predicted sample array) for the current block may be derived based on a reference block (i.e., reference sample array) specified by a motion vector on a reference picture indicated by a reference picture index. In this case, in order to reduce the amount of motion information to be transmitted in the inter-prediction mode, the motion information about the current block may be predicted on a block-by-block, sub-block-by-sub-block, or sample-by-sample basis based on the correlation of motion information between the neighboring blocks and the current block. The motion information may include a motion vector and a reference picture index. The motion information may further include inter-prediction type information (L0 prediction, L1 prediction, Bi prediction, etc.). When inter-prediction is applied, the neighboring blocks may include a spatial neighboring block present in the current picture and a temporal neighboring block present in the reference picture. The reference picture including the reference block and the reference picture including the temporal neighboring block may be the same or different. The temporal neighboring block may be referred to as a collocated reference block, a collocated CU (colCU), or the like, and the reference picture including the temporal neighboring block may be referred to as a collocated picture (colPic). For example, a list of motion information candidates may be constructed based on the neighboring blocks of the current block, and flag or index information indicating which candidate is selected (used) to derive the motion vector and/or the reference picture index of the current block may be signaled. Inter-prediction may be performed based on various prediction modes. For example, in the skip mode and merge mode, the motion information about the current block may be the same as the motion information about a selected neighboring block. In the skip mode, unlike in the merge mode, no residual signal may be transmitted. In the motion vector prediction (MVP) mode, the motion vector of the selected neighboring block may be used as a motion vector predictor, and a motion vector difference may be signaled. In this case, the motion vector of the current block may be derived based on the sum of the motion vector predictor and the motion vector difference.

The motion information may include L0 motion information and/or L1 motion information depending on the inter-prediction type (e.g., L0 prediction, L1 prediction, or Bi-prediction). A motion vector in the L0 direction may be referred to as an L0 motion vector or MVL0, and a motion vector in the L1 direction may be referred to as an L1 motion vector or MVL1. Prediction based on the L0 motion vector may be referred to as L0 prediction, prediction based on the L1 motion vector may be referred to as L1 prediction, and prediction based on both the L0 motion vector and the L1 motion vector may be referred to as bi-prediction. Here, the L0 motion vector may represent a motion vector associated with a reference picture list L0, and the L1 motion vector may represent a motion vector associated with a reference picture list L1. The reference picture list L0 may include, as reference pictures, pictures that are earlier in output order than the current picture, and the reference picture list L1 may include pictures that are later in output order than the current picture. The earlier pictures may be referred to as forward (reference) pictures, and the later pictures may be referred to as backward (reference) pictures. The reference picture list L0 may further include, as reference pictures, pictures that are later in output order than the current picture. In this case, within the reference picture list L0, the earlier pictures may be indexed first and the later pictures may be indexed subsequently. The reference picture list L1 may further include, as reference pictures, pictures that are earlier in output order than the current picture. In this case, in the reference picture list L1, the later pictures may be indexed first and the earlier pictures may be indexed subsequently. Here, the output order may correspond to a picture order count (POC) order.

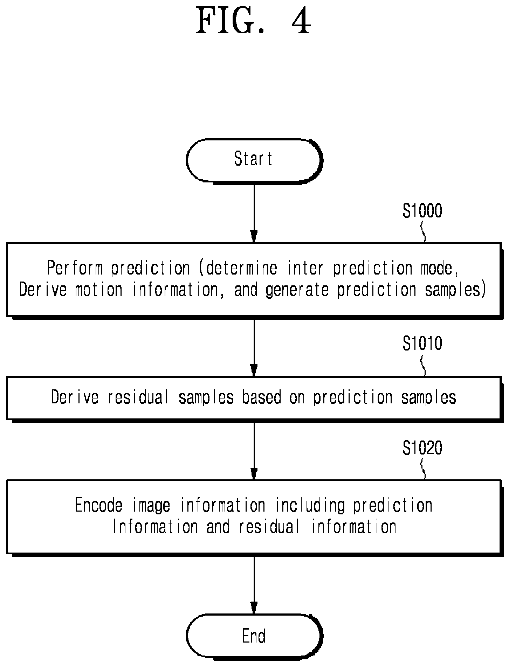

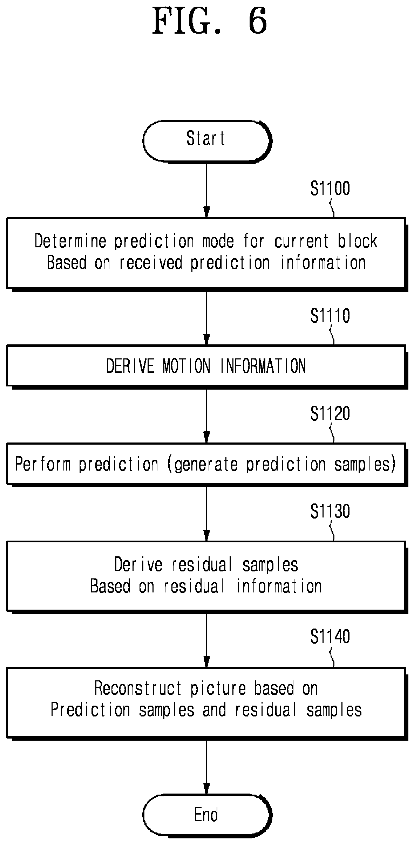

A video/image encoding procedure based on inter-prediction and an inter-predictor in an encoding apparatus are schematically illustrated in, for example, FIGS. 4 to 6.

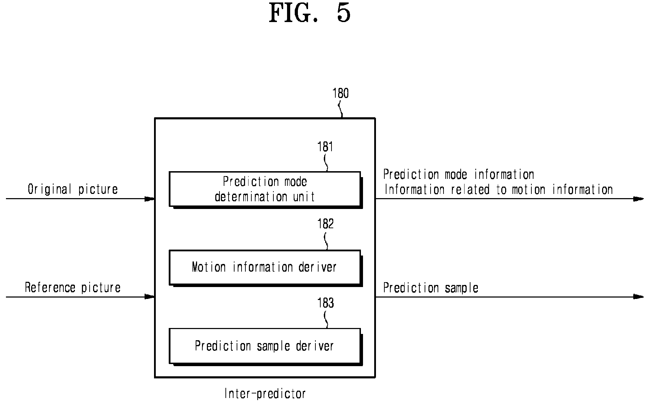

FIG. 4 illustrates an inter-prediction-based video/image encoding method, and FIG. 5 illustrates an inter-predictor in an encoding apparatus.

The encoding apparatus performs inter-prediction on a current block (S1000). The encoding apparatus may derive an inter-prediction mode and motion information about the current block, and generate prediction samples of the current block. The operations including determining the inter-prediction mode, deriving the motion information, and generating the prediction samples may be performed simultaneously, or one operation may be performed before another operation. For example, the inter-predictor 180 of the encoding apparatus may include a prediction mode determination unit 181, a motion information deriver 182, and a prediction sample deriver 183. The prediction mode determination unit 181 may determine the prediction mode for the current block, the motion information deriver 182 may derive motion information about the current block, and the prediction sample deriver 183 may derive prediction samples of the current block. For example, the inter-predictor 180 of the encoding apparatus may search for blocks similar to the current block within a specific area (search area) of the reference pictures through motion estimation, and derive a reference block whose difference from the current block is the smallest or less than or equal to a predetermined threshold. Then, a reference picture index indicating the reference picture in which the reference block is located may be derived, and a motion vector may be derived based on the difference in position between the reference block and the current block. The encoding apparatus may determine a prediction mode to be applied to the current block from among various prediction modes. The encoding apparatus may compare RD costs for the various prediction modes and determine an optimal prediction mode for the current block.

For example, when the skip mode or the merge mode is applied to the current block, the encoding apparatus may configure a merge candidate list, which will be described later, and derive, from among the reference blocks indicated by the merge candidates in the merge candidate list, a reference block whose difference from the current block is the smallest or less than or equal to a predetermined threshold. In this case, a merge candidate associated with the derived reference block may be selected, and merge index information indicating the selected merge candidate may be generated and signaled to the decoding apparatus. Based on the motion information about the selected merge candidate, the motion information about the current block may be derived.

As another example, when the (A)MVP mode is applied to the current block, the encoding apparatus may configure an (A)MVP candidate list, and may use the motion vector of a motion vector predictor (mvp) candidate selected from among the mvp candidates included in the (A)MVP candidate list as the mvp of the current block. In this case, for example, the motion vector indicating the reference block derived by the above-described motion estimation may be used as the motion vector of the current block, and the mvp candidate having the motion vector with the smallest difference from the motion vector of the current block among the mvp candidates may be the selected mvp candidate. A motion vector difference (MVD), which is obtained by subtracting the mvp from the motion vector of the current block, may be derived. In this case, information about the MVD may be signaled to the decoding apparatus. In addition, when the (A)MVP mode is applied, the value of the reference picture index may be configured as reference picture index information and signaled to the decoding apparatus separately.

The encoding apparatus may derive the residual samples based on the prediction samples (S1010). The encoding apparatus may derive the residual samples by comparing the original samples of the current block with the prediction samples.

The encoding apparatus encodes the image information including the prediction information and the residual information (S1020). The encoding apparatus may output the encoded image information in the form of a bitstream. The prediction information may include, as information related to the prediction procedure, prediction mode information (e.g., skip flag, merge flag, or mode index) and information related to motion information. The information related to the motion information may include candidate selection information (e.g., merge index, mvp flag or mvp index), which is information used to derive the motion vector. Further, the information related to the motion information may include the information about the MVD and/or reference picture index information described above. Further, the information related to the motion information may include information indicating whether L0 prediction, L1 prediction, or bi-prediction is applied. The residual information is information about the residual samples. The residual information may include information about quantized transform coefficients for the residual samples.

The output bitstream may be stored on a (digital) storage medium and delivered to the decoding apparatus, or may be delivered to the decoding apparatus over a network.

As described above, the encoding apparatus may generate a reconstructed picture (including reconstructed samples and reconstructed blocks) based on the reference samples and the residual samples. This is intended to derive the same prediction result at the encoding apparatus as obtained at the decoding apparatus, thereby improving coding efficiency. Accordingly, the encoding apparatus may store the reconstructed picture (or reconstructed samples or reconstructed block) in memory and use the same as a reference picture for inter-prediction. As described above, an in-loop filtering procedure or the like may also be applied to the reconstructed picture.

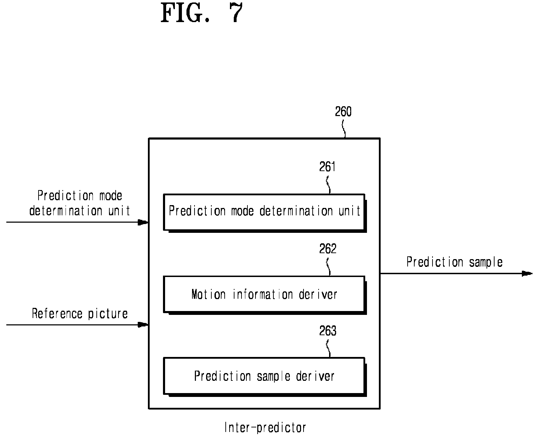

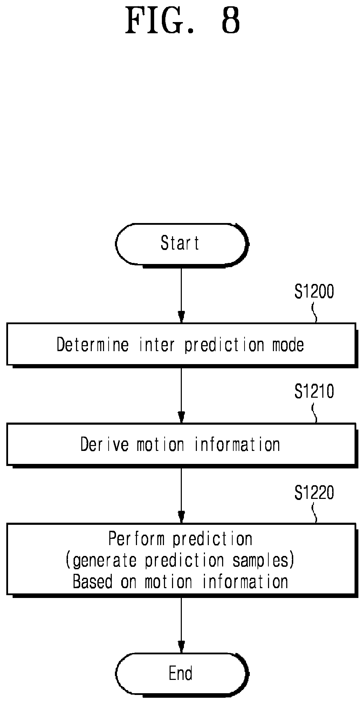

A video/image decoding procedure based on inter-prediction and an inter-predictor in the decoding apparatus are schematically illustrated in, for example, FIGS. 7 and 8.

FIG. 7 illustrates an inter-prediction-based video/image decoding method, and FIG. 8 illustrates an inter-predictor in the decoding apparatus.

The decoding apparatus may perform operations corresponding to the operations performed by the encoding apparatus. The decoding apparatus may perform prediction on the current block based on the received prediction information and derive prediction samples.

Specifically, the decoding apparatus may determine a prediction mode for the current block based on the received prediction information (S 1100). The decoding apparatus may determine a inter-prediction mode applied to the current block based on the prediction mode information in the prediction information.

For example, based on the merge flag, it may be determined whether the merge mode or the (A)MVP mode is to be applied to the current block. Alternatively, one of various inter-prediction mode candidates may be selected based on the mode index. The inter-prediction mode candidates may include the skip mode, the merge mode, and/or the (A)MVP mode, or may include various inter-prediction modes described later.

The decoding apparatus derives motion information about the current block based on the determined inter-prediction mode (S1110). For example, when the skip mode or merge mode is applied to the current block, the decoding apparatus may configure a merge candidate list and select one merge candidate from among the merge candidates included in the merge candidate list. The selection may be performed based on the selection information (merge index) described above. Based on the motion information about the selected merge candidate, the motion information about the current block may be derived. The motion information about the selected merge candidate may be used as the motion information about the current block.

As another example, when the (A)MVP mode is applied to the current block, the decoding apparatus may configure an (A)MVP candidate list and use the motion vector of a selected mvp candidate among the motion vector predictor (mvp) candidates included in the (A)MVP candidate list as the MVP of the current block. The selection may be performed based on the selection information (mvp flag or mvp index) described above. In this case, the MVD of the current block may be derived based on the information about the MVD, and the motion vector of the current block may be derived based on the MVD and the mvp of the current block. Further, based on the reference picture index information, a reference picture index for the current block may be derived. In the reference picture list for the current block, the picture indicated by the reference picture index may be derived as a reference picture to be referenced for inter-prediction of the current block.

As described hereinafter, the motion information about the current block may be derived without configuring a candidate list. In this case, the motion information about the current block may be derived according to the procedure disclosed in the prediction mode described later. In this case, the configuration of the candidate list as described above may be skipped.

The decoding apparatus may generate prediction samples for the current block based on the motion information about the current block (S1120). In this case, it may derive a reference picture based on the reference picture index for the current block and derive prediction samples of the current block based on the samples of a reference block indicated by the motion vector of the current block within the reference picture. In some case, as will be described later, a prediction sample filtering procedure may be further performed on all or some of the prediction samples of the current block.

For example, the inter-prediction portion 260 of the decoding apparatus may include a prediction mode determination unit 261, a motion information deriver 262, and a prediction sample deriver 263. The prediction mode determination unit 181 may determine the prediction mode for the current block based on the received prediction mode information, the motion information deriver 182 may derive motion information (such as a motion vector and/or reference picture index) related to the current block based on information related to the received motion information, and the prediction sample deriver 183 may derive prediction samples for the current block.

The decoding apparatus may generate residual samples for the current block based on the received residual information (S1130). The decoding apparatus may generate reconstructed samples for the current block based on the prediction samples and the residual samples, and may generate a reconstructed picture based on the reconstructed samples. (S1140). The in-loop filtering procedure or the like may then be applied to the reconstructed picture, as described above.

As described above, the inter-prediction procedure may include determining an inter-prediction mode, deriving motion information based on the determined prediction mode, and performing prediction (generating prediction samples) based on the derived motion information. The inter-prediction procedure may be performed by the encoding apparatus and the decoding apparatus as described above.

FIG. 8 illustrates an inter-prediction procedure.

Various inter-prediction modes may be used to predict the current block in the picture. For example, various modes such as merge mode, skip mode, MVP (motion vector prediction) mode, affine mode, sub-block merge mode, and MMVD (merge with MVD) mode may be used. Additional modes such as DMVR (decoder side motion vector refinement) mode, AMVR (adaptive motion vector resolution) mode, Bi-prediction with CU-level weight (BCW), Bi-directional optical flow (BDOF), etc. may be used in addition or instead. The affine mode may also be referred to as affine motion prediction mode. The MVP mode may also be referred to as AMVP (advanced motion vector prediction) mode. As described herein, some modes and/or motion information candidates derived by some modes may be included as motion information related candidates of other modes. For example, an HMVP candidate may be added as a merge candidate in the merge/skip mode, or as an mvp candidate in the mvp mode.

Prediction mode information indicating the inter-prediction mode of the current block may be signaled from the encoding apparatus to the decoding apparatus. The prediction mode information may be included in a bitstream and received by the decoding apparatus. The prediction mode information may include index information indicating one of multiple candidate modes. Alternatively, the inter-prediction mode may be indicated through hierarchical signaling of flag information. In this case, the prediction mode information may include one or more flags. For example, a skip flag may be signaled to indicate whether the skip mode is applied. If the skip mode is not applied, a merge flag may be signaled to indicate whether the merge mode is applied. If the merge mode is not applied, it may be indicated that the MVP mode is applied, or a flag for further distinction may be signaled. The affine mode may be signaled as an independent mode, or may be signaled as a mode that is dependent on the merge mode or MVP mode. For example, the affine mode may include an affine merge mode and an affine MVP mode.

Information indicating whether the list0 (L0) prediction, list1 (L1) prediction, or bi-prediction described above for the current block is used for the current block (current coding unit) may be signaled. The information may be referred to as motion prediction direction information, inter-prediction direction information, or inter-prediction indication information, and may be configured/encoded/signaled in the form of, for example, an inter_pred_idc syntax element. That is, the inter_pred_idc syntax element may indicate whether the list0 (L0) prediction, list1 (L1) prediction, or bi-prediction is used for the current block (current coding unit). For simplicity, the inter-prediction type (L0 prediction, L1 prediction, or BI prediction) indicated by the inter_pred_idc syntax element may be referred to as motion prediction direction in the present disclosure. L0 prediction may be denoted by pred_L0, L1 prediction by pred_L1, and bi-prediction by pred_BI. For example, the values of the inter_pred_idc syntax element may indicate the prediction types as follows.

[Table 1]

| inter_pred_idc | Name of intex_pred_idc | |
|---|---|---|
| | ( chWidth+cbHaight) != 8 | ( cbWidth + cbHeaight) == 8 |
| 0 | PRED_L0 | PRED_L0 |
| 1 | PRED_L1 | PFED_L1 |
| 2 | PRED_BI | n.a. |

As described above, a picture may include one or more slices. A slice may have one of slice types including intra (I) slice, predictive (P) slice, and bi-predictive (B) slice. The slice type may be indicated based on slice type information. For blocks in an I slice, inter-prediction is not used for prediction and only intra-prediction may be used. Of course, in this case, the original sample values may be coded and signaled without prediction. For the blocks in a P slice, either intra-prediction or inter-prediction may be used. When inter-prediction is applied, only uni prediction may be used. On the other hand, for blocks in a B slice, intra-prediction or inter-prediction may be used. When inter-prediction is applied, up to (bi-)prediction may be applied.

L0 and L1 may include reference pictures encoded/decoded earlier than the current picture. For example, L0 may include reference pictures that are earlier and/or later than the current picture in POC order, and L1 may include reference pictures that are later and/or earlier than the current picture in POC order. In this case, in L0, the reference pictures earlier in POC order than the current picture may be assigned relatively lower reference picture indices. In L1, the reference pictures later in POC order than the current picture may be assigned relatively lower indices. For the B slice, bi-prediction may be applied. Even in this case, unidirectional bi-prediction or true bi-directional bi-prediction may be applied. The bidirectional bi-prediction may be referred to as true bi-prediction.

Specifically, for example, information about the inter-prediction mode of the current block may be coded and signaled at the CU (CU syntax) level, or may be implicitly determined based on a criterion. In this case, some modes may be explicitly signaled, while others may be implicitly derived.

For example, the CU syntax may carry information about the (inter-)prediction mode as shown below.

[Table 2]

| coding_unit( x0, y0, cbWidth, cbHeight, treeType ) { | **Descriptor** |
|---|---|
|   if( slice _type != I \|\| sps_ibc_enabled_flag ) { | |
|     if( treeType != DUAL_TREE_CHROMA &&     !( cbWidth = = 4 && cbHeight = = 4 && ! sps_ibc_enabled_flag ) ) | |
|       **cu_skip_flag[** x0 ][ y0 ] | ae(v) |
|     if( cu_skip_flag[ x0 ][ y0 ] = = 0 && slice_type != I    && !( cbWidth = = 4 && cbHeight = = 4 ) ) | |
|       **pred_mode_flag** | ae(v) |
|     if( ( ( slice_type = = I && cu_skip_flag[ x0 ][ y0 ] = =0 ) \|\|   ( slice_type != I && ( CuPredMode[ x0 ][ y0 ] != MODE_INTRA \|\|  ( cbWidth = = 4 && cbHeight = = 4 && cu_skip_flag[ x0 ][ y0 ] = = 0 )))) &&  sps_ibc_enabled_flag && ( cbWidth != 128 \|\| cbHeight != 128 ) ) | |
|       **pred_mode_ibc_flag** | ae(v) |
|   } | |
|   if( CuPredMode[ x0 ][ y0 ] = = MODE_INTRA ) { | |
|     if( sps_pcm_enabled_flag &&   cbWidth >= MinIpcmCbSizeY && cbWidth <= MaxIpcmCbSizeY &&   cbHeight >= MinIpcmCbSizeY && cbHeight <= MaxIpcmCbSizeY ) | |
|       **pcm_flag**[ x0 ][ y0 ] | ae(v) |
|     if( pcm_flag[ x0 ][ y0 ] ) { | |
|       while( !byte_aligned( ) ) | |
|         **pcm_alignment_zero_bit** | f(1) |
|       pcm_sample( cbWidth, cbHeight, treeType) | |
|     } else { | |
|       if( treeType = = SINGLE_TREE \|\| treeType = = DUAL_TREE_LUMA ) { | |
|       if( cbWidth <= 32 && cbHeight <= 32 ) | |
|       **intra_bdpcm_flag[** x0 ][ y0 ] | ae(v) |
|       if( intra_bdpcm_flag[ x0 ][ y0 ] ) | |
|       **intra_bdpcm_dir_flag**[ x0 ][ y0 ] | ae(v) |
|       else { | |
|         if( sps_mip_enabled_flag &&   ( Abs( Log2( cbWidth ) - Log2( cbHeight ) ) <= 2 ) &&   cbWidth <= MaxTbSizeY && cbHeight <= MaxTbSizeY ) | |
|         **intra_mip_flag[** x0 ][ y0 ] | ae(v) |

(continued)

| | |
|---|---|
| if( intra_mip_flag[ x0 ][ y0 ] ) { | |
| **intra_mip_mpm_flag[** x0 ][ y0 ] | ae(v) |
| if( intra_mip_mpm_flag[ x0 ][ y0 ] ) | |
| **intra_mip_mpm_idx[** x0 ][ y0 ] | ae(v) |
| else | |
| | |
| **intra_mip_mpm_remainder**[ x0 ][ y0 ] | ae(v) |
| } else { | |
| if( sps_mrl_enabled_flag && ( ( y0 % CtbSizeY ) > 0 ) ) | |
| **intra_luma_ref_idx[** x0 ][ y0 ] | ae(v) |
| if ( sps_isp_enabled_flag && intra_luma_ref_idx[ x0 ][ y0 ] = = 0 &&         ( cbWidth <= MaxTbSizeY && cbHeight <= MaxTbSizeY ) &&         ( cbWidth * cbHeight > MinTbSizeY * MinTbSizeY ) ) | |
| **intra_subpartitions_mode_flag**[ x0 ][ y0 ] | ae(v) |
| if( intra_subpartitions_mode_flag[ x0 ][ y0 ] = = 1 &&         cbWidth <= MaxTbSizeY && cbHeight <= MaxTbSizeY ) | |
| **intra_subpartitions_split_flag[** x0 ][ y0 ] | ae(v) |
| if( intra_luma_ref_idx[ x0 ][ y0 ] = = 0 &&         intra_subpartitions_mode_flag[ x0 ] [ y0 ] = = 0 ) | |
| **intra_luma_mpm_flag[** x0 ][ y0 ] | ae(v) |
| if( intra_luma_mpm_flag[ x0 ][ y0 ] ) { | |
| if( intra_luma_ref_idx[ x0 ][ y0 ] = = 0 ) | |
| **intra_luma_not_planar_flag[** x0 ][ y0 ] | ae(v) |
| if( intra_luma_not_planar_flag[ x0 ][ y0 ] ) | |
| **intra_luma_mpm_idx[** x0 ][ y0 ] | ae(v) |
| } else | |
| **intra_luma_mpm_remainder**[ x0 ][ y0 ] | ae(v) |
| } | |
| } | |
| } | |
| if( treeType = = SINGLE_TREE \| \| treeType = = DUAL_TREE_CHROMA ) | |
| **intra_chroma_pred_mode**[ x0 ][ y0 ] | ae(v) |
| } | |
| } else if( treeType != DUAL_TREE_CHROMA ) { /* MODE_INTER or MODE_IBC */ | |
| if( cu_skip_flag[ x0 ][ y0 ] = = 0 ) | |
| **general_merge_flag**[ x0 ][ y0 ] | ae(v) |
| if( general_merge_flag[ x0 ][ y0 ] ) { | |
| merge_data( x0, y0, cbWidth, cbHeight ) | |
| } else if ( CuPredMode[ x0 ][ y0 ] = = MODE_IBC ) { | |
| mvd_coding( x0, y0, 0, 0 ) | |
| **mvp_l0_flag[** x0 ][ y0 ] | ae(v) |

(continued)

| | |
|---|---|
| if( sps_amvr_enabled_flag && ( MvdL0[ x0 ][ y0 ][ 0 ] != 0 ‖ MvdL0[ x0 ][ y0 ][ 1 ] != 0 ) ) { | |
| amvr_precision_flag[ x0 ][ y0 ] | ae(v) |
| } | |
| } else { | |
| if( slice _type = = B ) | |
| inter_pred_idc[ x0 ][ y0 ] | ae(v) |
| if( sps_affine_enabled_flag && cbWidth >= 16 && cbHeight >= 16 ) { | |
| | |
| inter_affine_flag[ x0 ][ y0 ] | ae(v) |
| if( sps_affine_type_flag && inter_affine_flag[ x0 ][ y0 ] ) | |
| cu_affine_type_flag[ x0 ][ y0 ] | ae(v) |
| } | |
| if( sps_smvd_enabled_flag && inter_pred_idc[ x0 ][ y0 ] = = PRED_BI && linter_affine_flag[ x0 ][ y0 ] && RefIdxSymL0 > -1 && RefIdxSymL1 > -1 ) | |
| sym_mvd_flag[ x0 ][ y0 ] | ae(v) |
| if( inter_pred_idc[ x0 ][ y0 ] != PRED_L1 ) { | |
| if( NumRefIdxActive[ 0 ] > 1 && !sym_mvd_flag[ x0 ][ y0 ] ) | |
| ref_idx_l0[ x0 ][ y0 ] | ae(v) |
| mvd_coding( x0, y0, 0, 0 ) | |
| if( MotionModelIdc[ x0 ][ y0 ] > 0 ) | |
| mvd_coding( x0, y0, 0, 1 ) | |
| if(MotionModelIdc[ x0 ][ y0 ] > 1 ) | |
| mvd_coding( x0, y0, 0, 2 ) | |
| mvp_l0_flag[ x0 ][ y0 ] | ae(v) |
| } else { | |
| MvdL0[ x0 ][ y0 ][ 0 ] = 0 | |
| MvdL0[ x0 ][ y0 ][ 1 ] = 0 | |
| } | |
| if( inter_pred_idc[ x0 ][ y0 ] != PRED) { | |
| if( NumRefIdxActive[ 1 ] > 1 && ! sym_mvd_flag[ x0 ][ y0 ] ) | |
| ref_idx_l1[ x0 ][ y0 ] | ae(v) |
| if( mvd_l1_zero_flag && inter_pred_idc[ x0 ][ y0 ] = = PRED_BI ) { | |
| MvdL1[ x0][ y0 ][ 0 ] = 0 | |
| MvdL1[ x0 ][ y0 ][ 1 ] = 0 | |
| MvdCpL1[ x0][ y0][ 0][ 0] = 0 | |
| MvdCpL1[ x0][ y0 ][ 0 ][ 1 ] = 0 | |
| MvdCpL1[ x0][ y0 ][ 1 ][ 0 ] = 0 | |
| MvdCpL1[ x0 ][ y0 ][ 1 ][ 1 ] = 0 | |
| MvdCpL1[ x0 ][ y0 ][ 2 ][ 0] = 0 | |
| MvdCpL1[ x0 ][ y0 ][ 2 ][ 1 ] = 0 | |

| | |
|---|---|
| } else { | |
| if( sym _mvd_flag[ x0 ][ y0 ] ) { | |
| MvdL1[ x0 ][ y0 ][ 0 ] = -MvdL0[ x0 ][ y0 ][ 0 ] | |
| MvdL1[ x0 ][ y0 ][ 1 ] != -MvdL0[ x0 ][ y0 ][ 1 ] | |
| } else | |
| mvd_coding( x0, y0, 1, 0 ) | |
| if( MotionModelIdc[ x0 ][ y0 ] > 0 ) | |
| mvd_coding( x0, y0, 1, 1 ) | |
| if(MotionModelIdc[ x0 ][ y0 ] > 1 ) | |
| mvd_coding( x0, y0, 1, 2 ) | |
| **mvp_l1_flag[** x0 ][ y0 ] | ae(v) |
| } | |
| } else { | |
| | |
| MvdL1[ x0 ][ y0 ][ 0 ] = 0 | |
| MvdL1[ x0 ][ y0 ][ 1 ] = 0 | |
| } | |
| if( ( sps_amvr_enabled_flag && inter_affine_flag[ x0 ][ y0 ] = = 0 && <br> ( MvdL0[ x0 ][ y0 ][ 0 ] != 0 ‖ MvdL0[ x0 ][ y0 ][ 1 ] != 0 ‖ <br> MvdL1[ x0 ][ y0 ][ 0 ] != 0 \| \| MvdL1[ x0 ][ y0 ][ 1 ] != 0 ) ) ‖ <br> ( sps_affine_amvr_enabled_flag && inter_affine_flag[ x0 ][ y0 ] = = 1 && <br> ( MvdCpL0[ x0 ][ y0 ][ 0 ] [ 0] != 0 ‖ MvdCpL0[ x0 ][ y0 ][ 0 ] [1] != 0 ‖ <br> MvdCpL1[ x0 ][ y0 ][ 0 ] [ 0 ] != 0 ‖ MvdCpL1[ x0 ][ y0 ][ 0 ] [1] != 0 ‖ <br> MvdCpL0[ x0 ][ y0 ][ 1 ] [ 0 ] != 0 ‖ MvdCpL0[ x0 ][ y0 ][ 1 ] [1] != 0 ‖ <br> MvdCpL1[ x0 ][ y0 ][ 1 ] [ 0 ] != 0 ‖ MvdCpL1[ x0 ][ y0 ][ 1 ] [1] != 0 ‖ <br> MvdCpL0[ x0 ][ y0 ][ 2 ] [ 0] != 0 \| \| MvdCpL0[ x0 ][ y0 ][ 2 ] [1] != 0 ‖ <br> MvdCpL1[ x0 ][ y0 ][ 2 ] [ 0 ] != 0 ‖ MvdCpL1[ x0 ][ y0 ][ 2 ] [ 1 ] != 0 ) ) ) { | |
| **amvr_flag[** x0 ][ y0 ] | ae(v) |
| if( amvr_flag[ x0 ][ y0 ] ) | |
| **amvr_precision_flag[** x0 ][ y0 ] | ae(v) |
| } | |
| if( sps_bcw_enabled_flag && inter_pred_idc[ x0 ][ y0 ] = = PRED_BI && <br> luma_weight_l0_flag[ ref_idx_l0 [ x0 ][ y0 ] ] = = 0 && <br> luma_weight_l1_flag[ ref_idx_l1 [ x0 ][ y0 ] ] = = 0 && <br> chroma_weight_l0_flag[ ref_idx_l0 [ x0 ][ y0 ] ] = = 0 && <br> chroma_weight_l1_flag[ ref_idx_l1 [ x0 ][ y0 ] ] = = 0 && <br> cbWidth * cbHeight >= 256 ) | |
| **bcw_idx[** x0 ][ y0 ] | ae(v) |
| } | |
| } | |
| if( !pcm_flag[ x0 ][ y0 ] ) { | |
| if( CuPredMode[ x0 ][ y0 ] != MODE_INTRA && <br> general_merge_flag[ x0 ][ y0 ] = = 0 ) | |

(continued)

| cu_cbf | ae(v) |
|---|---|

| | |
|---|---|
| if( cu_cbf) { | |
| if( CuPredMode[ x0 ][ y0 ] = = MODE_INTER && sps_sbt_enabled_flag &&          !ciip_flag[ x0 ] [ y0 ] && !MergeTriangleFlag[ x0 ][ y0 ] ) { | |
| if( cbWidth <= MaxSbtSize && cbHeight <= MaxSbtSize ) { | |
| allowSbtVerH = cbWidth >= 8 | |
| allowSbtVerQ = cbWidth >= 16 | |
| allowSbtHorH = cbHeight >= 8 | |
| allowSbtHorQ = cbHeight >= 16 | |
| if( allowSbtVerH ‖ allowSbtHorH ‖ allowSbtVerQ ‖ allowSbtHorQ ) | |
| **cu_sbt_flag** | ae(v) |
| } | |
| if( cu_sbt flag ) { | |
| if( ( allowSbtVerH ‖ allowSbtHorH ) && ( allowSbtVerQ ‖ allowSbtHorQ) ) | |
| **cu_sbt_quad_flag** | ae(v) |
| if( ( cu_sbt_quad_flag && allowSbtVerQ && allowSbtHorQ ) ‖ ( !cu_sbt_quad_flag && allowSbtVerH && allowSbtHorH ) ) | |
| **cu_sbt_horizontal_flag** | ae(v) |
| **cu_sbt_pos_flag** | ae(v) |
| } | |
| } | |
| numSigCoeff = 0 | |
| numZeroOutSigCoeff = 0 | |
| transform_tree( x0, y0, cbWidth, cbHeight, treeType ) | |
| lfnstWidth = ( treeType = = DUAL_TREE_CHROMA) ? cbWidth / SubWidthC          : cbWidth | |
| lfnstHeight = ( treeType = = DUAL_TREE_CHROMA) ? cbHeight / SubHeightC          : cbHeight | |
| if( Min( lfnstWidth, lfnstHeight ) >= 4 && sps_lfnst_enabled_flag = = 1 &&     CuPredMode[ x0 ][ y0 ] = = MODE_INTRA &&     IntraSubPartitionsSplitType = = ISP_NO_SPLIT &&     !intra_mip_flag[ x0 ][ y0 ] ) { | |
| if( ( numSigCoeff > ( ( treeType = = SINGLE_TREE ) ? 2 : 1 ) ) &&     numZeroOutSigCoeff = = 0 ) | |
| **lfnst_idx[** x0 ][ y0 ] | ae(v) |
| } | |
| } | |
| } | |
| } | |

Here, cu_skipflag may indicate whether the skip mode is applied to the current block (CU). pred_mode_flag set to 0 indicates that the current coding unit is coded in the inter-prediction mode, and pred_mode_flag set to 1 indicates that the current coding unit is coded in the intra-prediction mode.

pred_mode_ibc_flag set to 1 indicates that the current coding unit is coded in the IBC prediction mode, and pred_mode_ibc_flag set to 1 0 indicates that the current coding unit is not coded in the IBC prediction mode.

pcm_flag[ x0 ][ y0 ] set to 1 indicates that a pcm_sample( ) shintax structure is present and that a transform_tree( ) shintax structure is not present in the coding unit containing the luma coding block at position ( x0, y0 ). pcm_flag[ x0 ][ y0 ] set to 0 indicates that the pcm_sample( ) syntax structure is not present. That is, pcm_flag may indicate whether a puls coding modulation (PCM) mode is applied to the current block. When the PCM mode is applied to the current block, prediction/translation/quantization may not be applied, and the value of the original sample in the current block may be coded and signaled.

intra_mip_flag[ x0 ][ y0 ] set to 1 indicates that the intra-prediction type for luma samples is MIP (matrix-based intra-prediction). intra_mip_flag[ x0 ][ y0 ] set to 0 indicates that the intra-prediction type for the luma samples is not MIP. In other words, intra_mip_flag may indicate whether the MIP prediction mode (type) is applied to (the luma samples in) the current block.

intra_chroma_pred_mode[ x0 ][ y0 ] specifies the intra-prediction mode for chroma samples in the current block.

general_merge__flag[ x0 ][ y0 ] indicates whether the intra-prediction parameters for the current coding unit are inferred (derived) from neighboring intra-predicted partitions. In other words, general_merge_flag may indicate that general merge is available. When the value of general _merge_flag is 1, regular merge mode, mmvd mode, and merge subblock mode (or subblock merge mode) may be available. For example, when general _merge_flag is 1, the merge data syntax may be parsed from the encoded video/image information (or bitstream). The merge data syntax may be configured/coded to include the following information.

[Table 3]

| merge_data( x0, y0, cbWidth, cbHeight ) { | Descript or |
|---|---|
|   if ( CuPredMode[ x0 ][ y0 ] = = MODE_IBC ) { | |
|     if( MaxNumMergeCand > 1 ) | |
|       **merge_idx**[ x0 ][ y0 ] | ae(v) |
|   } else { | |
|     if( sps_mmvd_enabled_flag \|\| cbWidth * cbHeight != 32 ) | |
|       **regular_merge_flag**[ x0 ][ y0 ] | ae(v) |
|     if ( regular_merge_flag[ x0 ][ y0 ] = = 1 ){ | |
|       if( MaxNumMergeCand > 1 ) | |
|         **merge_idx**[ x0 ][ y0 ] | ae(v) |
|     } else { | |
|       if( sps_mmvd_enabled_flag && cbWidth * cbHeight != 32 ) | |
|         **mmvd_merge_flag**[ x0 ][ y0 ] | ae(v) |
|       if( mmvd_merge_flag x0 ][ y0 ] = = 1 ) { | |
|         if( MaxNumMergeCand > 1 ) | |
|           **mmvd_cand_flag**[ x0 ][ y0 ] | ae(v) |
|         **mmvd_distance_idx**[ x0 ][ y0 ] | ae(v) |
|         **mmvd_direction_idx**[ x0 ][ y0 ] | ae(v) |
|       } else { | |
|         if( MaxNumSubblockMergeCand > 0 && cbWidth >= 8 && cbHeight >= 8 ) | |
|           **merge_subblock_flag**[ x0 ][ y0 ] | ae(v) |
|         if( merge_subblock_flag[ x0 ][ y0 ] = = 1 ) { | |
|           if( MaxNumSubblockMergeCand > 1 ) | |
|             **merge_subblock_idx**[ x0 ][ y0 ] | ae(v) |
|         } else { | |

(continued)

| if( sps_ciip_enabled_flag && cu_skip_flag[ x0 ][ y0 ] = = 0 && ( cbWidth * cbHeight ) >= 64 && cbWidth < 128 && cbHeight < 128 ) { | |
|---|---|
| **ciip_flag**[ x0 ][ y0 ] | ae(v) |
| if( ciip_flag[ x0 ][ y0 ] && MaxNumMergeCand > 1 ) | |
| **merge_idx**[ x0 ][ y0 ] | ae(v) |
| } | |
| if( MergeTriangleFlag[ x0 ][ y0 ] ) { | |
| **merge_triangle_split_dir**[ x0 ][ y0 ] | ae(v) |
| **merge_triangle_idx0**[ x0 ][ y0 ] | ae(v) |
| **merge_triangle_idx1**[ x0 ][ y0 ] | ae(v) |
| } | |
| } | |
| } | |
| } | |
| } | |
| } | |

Here, regular_merge_flag[ x0 ][ y0 ] set to 1 indicates that regular merge mode is used to generate the inter-prediction parameters for the current coding unit. In other words, regular_merge_flag indicates whether merge mode (regular merge mode) is applied to the current block. mmvd_merge_flag[ x0 ][ y0 ] set to 1 indicates that the merge mode with motion vector difference (MMVD) is used to generate the inter-prediction parameters for the current coding unit. In other words, mmvd_merge_flag indicates whether the MMVD is applied to the current block.

mmvd_cand_flag[ x0 ][ y0 ] indicates whether the first (0) or second (1) candidate in the merge candidate list is used with the motion vector difference derived from mmvd_distance_idx[ x0 ][ y0 ] and mmvd_direction_idx[ x0 ][ y0 ].

mmvd_distance_idx[ x0 ][ y0 ] specifies the index to derive MmvdDistance[ x0 ][ y0 ].

mmvd_direction_idx[ x0 ][ y0 ] specifies the index to derive MmvdSign[ x0 ][ y0 ].

merge_subblock_flag[ x0 ][ y0 ] indicates whether the merge mode is used to generate subblock-based inter-prediction parameters for the current coding unit. In other words, merge_subblock_flag may indicate whether the subblock merge mode (or affine merge mode) is applied to the current block.

merge_subblock_idx[ x0 ][ y0 ] indicates the merge candidate list of the subblock-based merge candidate list.

ciip_flag[ x0 ][ y0 ] indicates whether the combined inter-picture merge and intra-picture prediction is applied to the current coding unit.

ciip_flag[ x0 ][ y0 ] indicates whether the combined inter-picture merge and intra-picture prediction is applied to the current coding unit.

merge_triangle_idx0[ x0 ][ y0 ] specifies the first merge candidate index in the triangle-based motion compensation candidate list.

merge_triangle_idx1[ x0 ][ y0 ] specifies the second merge candidate index in the triangle-based motion compensation candidate list.

merge_idx[ x0 ][ y0 ] specifies the index of the merge candidate in the merge candidate list.

Referring back to the CU syntax, mvp_l0_flag[ x0 ][ y0 ] indicates the motion vector predictor index in list 0. In other words, when MVP mode is applied, mvp_l0_flag may indicate a candidate selected in MVP candidate list 0 for derivation of the MVP of the current block.

mvp_l1_flag[ x0 ][ y0 ] has the same semantics as mvp_l0_flag, with l0 and list0 being replaced by l1 and list1, respectively.

inter_pred_idc[ x0 ][ y0 ] indicates whether list 0, list 1, or bi-prediction is used in the current coding unit.

sym_mvd_flag[ x0 ][ y0 ] set to 1 indicates that the mvd_coding(x0, y0, refList, cpIdx) syntax structure with for the syntax elements ref_idx_l0[ x0 ][ y0 ] and ref_idx_l1[ x0 ][ y0 ], and refList = 1 is not present. In other words, sym_mvd_flag indicates whether symmetric MVD is used for mvd coding.

ref_idx_l0[ x0 ][ y0 ] specifies the list 0 reference picture index for the current coding unit.

ref_idx_l1[ x0 ][ y0 ] has the same semantics as ref_idx_l0, with l0, L0, and list 0 replaced by l1, L1, and list 1, respectively.

inter_affine_flag[ x0 ][ y0 ] set to 1 indicates that affine model-based motion compensation is used to generate prediction samples of the current coding unit when decoding a P or B slice for the current coding unit.

cu_affine_type flag[ x0 ][ y0 ] set to 1 indicates that a 6-parameter affine model-based motion compensation is used to generate prediction samples of the current coding unit when decoding the P or B slice for the current coding unit. cu_affine_type_flag[ x0 ][ y0 ] set to 0 indicates that a 4-parameter model-based motion compensation is used to generate prediction samples of the current coding unit.

amvr_flag[ x0 ][ y0 ] indicates the resolution of the motion vector difference. Array indices x0 and y0 indicate the position (x0, y0) of the top-left luma sample of the coding block considered relative to the top-left luma sample of the picture. amvr__flag[ x0 ][ y0 ] set to 0 indicates that the resolution of the motion vector difference is 1/4 of a luma sample. amvr_flag [ x0 ][ y0 ] set to 1 indicates that the resolution of the motion vector difference is specified by amvr_precision_flag[ x0 ][ y0 ].

amvr_precision_flag[ x0 ][ y0 ] set to 0 indicates that the resolution of the motion vector difference is one integer luma sample if inter_affine_flag[ x0 ][ y0 ] is 0, and 1/16 of a luma sample otherwise. amvr_precision_flag[ x0 ][ y0 ] set to 1 indicates that the resolution of the motion vector difference is four luma samples if inter_affine_flag[ x0 ][ y0 ] is 0, and one integer luma sample otherwise. The array indices x0 and y0 specify the position (x0, y0) of the top-left luma sample of the coding block considered relative to the top-left luma sample of the picture.

bcw_idx[ x0 ][ y0 ] specifies the index of the bi-prediction weight with CU weight.

### Derivation of motion information

Inter prediction may be performed using motion information about the current block. The encoding apparatus may derive optimal motion information for the current block through a motion estimation procedure. For example, the encoding apparatus may search for a similar reference block having a high correlation in units of fractional pixels within a predetermined search range in the reference picture using the original block in the original picture for the current block, thereby deriving motion information. Similarity of blocks may be derived based on a difference of phase based sample values. For example, the similarity of the blocks may be calculated based on the SAD between the current block (or template of the current block) and the reference block (or template of the reference block). In this case, motion information may be derived based on a reference block having the smallest SAD in the search area. The derived motion information may be signaled to the decoding apparatus according to various methods based on the inter prediction mode.

### Generation of prediction sample

A predicted block for the current block may be derived based on motion information derived according to the prediction mode. The predicted block may include prediction samples (prediction sample array) of the current block. When the motion vector of the current block indicates a fractional sample unit, an interpolation procedure may be performed, through which prediction samples of the current block may be derived based on reference samples in the fractional sample unit within a reference picture. When affine inter prediction is applied to the current block, prediction samples may be generated based on a sample/subblock unit MV. When bi-prediction is applied, prediction samples derived through weighting or weighted averaging (according to phase) of prediction samples derived based on L0 prediction (that is, prediction using the reference picture and MVL0 in reference picture list L0) and prediction samples derived based on L1 prediction (that is, prediction using the reference picture and MVL1 in reference picture list L1) may be used as prediction samples of the current block. When bi-prediction is applied, if the reference picture used for L0 prediction and the reference picture used for L1 prediction are located in different temporal directions with respect to the current picture (i.e., it is bi-prediction and bidirectional prediction), it may be called true bi-prediction.

Reconstructed samples and reconstructed pictures may be generated based on the derived prediction samples, and thereafter, a procedure such as in-loop filtering may be performed.

According to recent image coding technology, i.e., moving image compression technology, the resolution of a current image (current picture) in a coded layer video sequence (CLVS) may be changed. As described above, in the moving image compression technology, the inter-frame prediction may be performed based on a reference image (or reference picture), and the resolution of a layer image may vary in units such as a group of pictures (GOP), an intra-picture, or an individual image. In other words, the current image and the reference image (reference picture) may have different resolutions. In the case where the reference image and the current image have different resolutions, prediction may be performed on the current image using a reference picture resampling (RPR) technique, which performs additional processing for different resolutions, as long as the reference image and the current image belong to the same coded layer video sequence (CLVS) or the like. According to the RPR technique, the resolution of the reference picture may be changed. In other words, the resolution may be adjusted for images within one layer. When the current image and the reference image have different resolutions, the resolution ratio of the reference image to the current image may be calculated, and the reference image may be changed to the same resolution as the current image through sampling. In this regard, the image encoder may try encoding all the different resolutions and determine a resolution exhibiting the best performance. The best performance may be defined as the best image quality at the same bit rate or the lowest bit rate at the same image quality. To encode all the different resolutions to calculate the optimal resolution, the encoder is required to encode the same image multiple times, which may increase the complexity in terms of computation, time, and memory usage. To avoid increasing the complexity, the encoder may determine the resolution of an image at predefined intervals (e.g., every 0.5 seconds or 1 second), based on a predetermined number of frames (e.g., 1, 2, 4, 8, 16, 32, 64, 128), or according to a multiple of GOP or random access point (RAP). However, such simple resolution determination methods may not always lead to the optimal resolution.

To improve this, the present disclosure proposes a configuration for adaptively selecting multiple resolution ratios to change the resolution. According to the present disclosure, by determining the resolution ratio of the current image and the reference image, that is, determining the optimal resolution, and performing reference sample resampling, the encoding and decoding efficiency may be significantly improved. Further, the present disclosure provides a method for determining an optimal resolution when the RPR technique is available, which may provide a solution to the above-described issue. Further, the present disclosure related to an encoder and decoder technology related to an adaptive resolution change technique, and may provide a solution to the issue described above by proposing a method of transmitting current and reference pictures whose resolutions are different from each other and a control method for the encoder and decoder technology.

According to one embodiment of the present disclosure, the resolution may be determined based on quantization parameters and/or complexity of the image (e.g., PSNR, bit rate, etc.), wherein one resolution may be selected from among various resolutions. More specifically, for an adaptive resolution change technique and/or a reference picture resampling (RPR) technique, an optimal resolution, i.e., an optimal resolution ratio, may be determined, considering the quantization parameters and/or the complexity of the image. Here, the selected resolution information may be encoded into a bitstream to be signaled. The resolution information may be expressed in the form of a resolution index, a resolution ratio, or the like. Further, when the adaptive resolution change technique is used and the resolution of the current image is different from the resolution of the original image, filter information that is used to change the current image to the same size as the original image may be determined and signaled. In one example, the filter information may include information about one selected filter among the filters in the video codec. Further, the filtering may be selectively used inside or outside the codec. Further, when the filtering is used inside the codec, the corresponding image may be used as a reference image for another image.

With the present disclosure, improved encoding efficiency may be achieved by addressing the aforementioned technical issues and selecting and changing the optimal resolution. Further, by rescaling the current picture to the same size as the original through filtering, both improved image quality and coding efficiency according to use of the image as a reference image may be obtained.

One embodiment of the present disclosure is described below based on inter-frame prediction (inter-prediction) for clarity, the prediction method according to the present disclosure is not limited to inter-prediction. For example, intra-prediction may also be applied.

In the following description of one embodiment of the present disclosure, resampling may include both down-scaling and up-scaling.

Hereinafter, embodiments of the present disclosure will be described in more detail with reference to the drawings.

First, an embodiment of determining an optimal resolution ratio will be described.

In one example, an image encoding and/or decoding apparatus may select one of multiple resolution ratios for reference picture resampling. For each group of pictures (GOP), the image encoding apparatus may determine one of multiple candidate resolutions based on the threshold of a peak signal to noise ratio (PSNR), which varies based on initial quantization parameters. To determine the resolution, the PSNR between an image obtained by performing down-sampling followed by up-sampling (e.g., an image obtained by down-sampling or up-sampling a first picture in each GOP) and an original image (e.g., a source image, the first picture in each GOP) may be derived for any first picture (e.g., the first picture) in each GOP. Based on the PSNR of the first picture in the same GOP, the PSNR of the current image may be derived.

The resolution ratio may be determined per periodic time (0.5 seconds, 1 second, etc.) or predetermined number of frames (1, 2, 4, 8, 16, 32, 64, 128, etc.), group of pictures (GOP) or multiple thereof, or random access point (RAP) or multiple thereof. When the ratio is determined based per GOP, the GOP may include one or more images (pictures). In other words, the PSNR may be calculated between the up-sampled (up-scaled) image after down-sampling (down-scaling) and the original image. The first picture may be down-sampled to a half resolution corresponding to half the resolution of the original, and then resampled (rescaled) back to the original resolution.

The down-sampling (down-scaling) resolution of the first picture is not limited to the half resolution, and may be any other resolution, e.g., any real value greater than 0 and less than 1, such as 1/2, 1/4, 3/4, 4/5, 1/8, etc. Further, the down-sampling resolution may be variably selected depending on the resolution of the original image. For example, an image having a 4K resolution may be down-sampled (down-scaled) to 1/2 resolution, and an 8K image may be down-sampled (down-scaled) to 1/4 resolution, thereby reducing memory complexity required for the down-sampling (down-scaling) as the resolution of the original image increases. In another example, multiple down-sampling (down-scaling) resolutions may be used to determine a resolution ratio for applying the adaptive resolution change technique based on the collected information. That is, the PSNR information between the original picture and each picture obtained through down-sampling (down-scaling) and up-sampling (up-scaling) may be derived by different resolutions, and the optimal resolution ratio may be determined through a process such as Equations 1 and 2 below. In this process, multiple pieces of PSNR information may be fused into a single piece of PSNR information to be applied to the equations for determining a resolution ratio, or a final resolution ratio may be determined based on multiple pieces of resolution ratio information obtained by applying each piece of PSNR information to the equations.

When using the adaptive resolution change technique or the reference image resampling technique, one of various candidate resolutions may be selected for a given picture. For example, the candidate resolutions may include 1/2, 2/3, 4/5, or 1. Here, 1 may refer to the original resolution, which may be up-sampled or down-sampled to the respective resolutions. The candidate resolutions may also be expressed as 2, 3/2, 5/4, or 1. That is, the reference picture may have a resolution that is twice, 3/2 times, or 5/4 times smaller or larger than the current picture, or have the same resolution as the current picture. In the case of having the same resolution, resolution ratio adjustment may be skipped.

The resolution ratio value may be derived from index information indicating the resolution ratio. The index information may be included in the bitstream as a VPS, SPS, PPS, picture header, slice header, or the like. The index information may also be flag information. Based on the index information, one resolution ratio may be selected from among multiple ratios. In another example, it may not be signaled in the bitstream. Instead, information about the resolution ratio may be derived based on other information.

In one example, one resolution may be selected from among various resolutions based on a PSNR threshold that adaptively varies with the quantization parameter. In one example, when reference image resampling (RPR) is performed on an image contained in any i-th GOP, the resolution ratio (scaling factor) may be derived as follows.

[Equation 1]

$$RPR\_R[GOP_i]$$

$$= \frac{1}{2}, ScaledPSNR_i > BasePSNR - (QP_i - BaseQP) * Decay$$

or

$$= \frac{2}{3}, ScaledPSNR_i > (BasePSNR - OffsetPSNR) - (QP_i - BaseQP) * Decay$$

or

$$= \frac{4}{5}, ScaledPSNR_i > (BasePSNR - OffsetPSNR * 2) - (QP_i - BaseQP) *$$

$$Decay$$

or

$$= 1, Otherwise$$

In one example, the resolution ratio may be derived based on at least one of ScaledPSNR, BasePSNR (e.g., a PSNR threshold), QP, or BaseQP (e.g., a QP threshold). For example, the resolution ratio may be derived by comparing the ScaledPSNR with another value. In one example, the resolution ratio may be selected from among multiple resolution ratios based on the ScaledPSNR. The value of the variable $ScaledPSNR_i$ may denote the aforementioned up-sampled PSNR for the first picture in any i-th GOP. Further, the variables BasePSNR and BaseQP may denote a specific PSNR and quantization parameter (QP), respectively. That is, they may represent a threshold PSNR value and a threshold parameter value, respectively. Each value may be predefined. The variable OffsetPSNR may denote the PSNR gap between images of two different resolutions. For example, the variable OffsetPSNR may denote the difference in PSNR between the original image and images with resolutions of 1/2, 2/3, and 4/5 or resolutions of 2, 3/2, and 5/4. The variable Decay may denote the rate of decrease of the PSNR threshold according to the quantization parameter. It may remain constant or vary. The i-th quantization parameter $QP_i$ may denote an initial QP of the first picture in any i-th GOP. In determining the resolution ratio with respect to the reference picture, the QP value and/or the PSNR value may be used. Further, the QP value may be an initial QP value. The QP value may be compared with a specific QP value. In other words, the resolution ratio may be determined based on an operation (e.g., subtraction, etc.) that compares the QP value and the specific QP value. Further, the PSNR value may be compared with a specific PSNR value. In other words, the resolution ratio may be determined based on an operation (e.g., subtraction, etc.) that compares the PSNR value with the specific PSNR value. The resolution ratio between the reference image and the current image may be determined on a per GOP basis, and therefore the same resolution ratio may be shared among pictures in the same GOP.

In one embodiment according to Equation 1, the QP range may be set to a specific range. For example, the QP range may be set to 22 to 42, and images at half resolution (1/2) (with horizontal scaling ratio ScalingRatioHor=2.0 and vertical scaling ratio ScalingRatioVer=2.0), 2/3 resolution (ScalingRatioHor2=1.5 and ScalingRatioVer2=1.5), and 4/5 resolution (ScalingRatioHor3=1.25 and ScalingRatioVer3=1.25) may each be adjusted to the original resolution (UpscaledOutput=2), and BaseQP, OffsetPSNR, and Decay may be set to 37, 3, and 0.5, respectively. BasePSNR for Random Access (RA) and All Intra (AI) may be set to specific values (e.g., 46 and 43), respectively. When the image is encoded at 1/2, 2/3, or 4/5 of the original resolution, the QP value may be adjusted by an offset. The QP value may be adjusted based on an offset defined as a specific value (e.g., -6) for an image with a 1/2 resolution ratio, (e.g., -4) for an image with a 2/3 resolution ratio, and (e.g., -2) for an image with a 4/5 resolution ratio.

As another example, Equation 1 used to derive the resolution ratio (scaling factor) (RPR_SF) may be modified as follows.

[Equation 2]

$$RPR\_SF[GOP_i]$$

$$= 2.0 \, , DnUpPSNR_i > BasePSNR - (QP_i - BaseQP) * 0.5$$

or

$$= 1.5 \, , ScaledPSNR_i > (BasePSNR - OffsetPSNR) - (QP_i - BaseQP) * 0.5$$

or

$$= 1.25 \, , ScaledPSNR_i > (BasePSNR - OffsetPSNR * 2) - (QP_i - BaseQP) * 0.5$$

or

$$= 1, Otherwise$$

In one example, the resolution ratio may be derived based on at least one of DnUpPSNR, BasePSNR, QP, or BaseQP. In one example, the variable DnUpPSNR may denote the aforementioned down-sampled or up-sampled PSNR for the first picture in any i-th GOP. The other variables, BasePSNR, BaseQP, OffsetPSNR, and the like may have the same meaning as described in Equation 1 above. $QP_i$ may denote an initial QP of the first picture in any i-th GOP. In contrast to [Equation 1], the threshold multiplied by the QP value (or the value from comparison between the QP and the initial QP value) may be specified as a specific value. In other words, it may be the value of a variable (e.g., Decay) as in [Equation 1]. In [Equation 2], it may be a specific value (e.g., 0.5).

In one embodiment according to [Equation 2], the QP range may be set to a specific range (e.g., 22 to 42), and images at half resolution (1/2) (with ScalingRatioHor=2.0 and ScalingRatioVer=2.0), 2/3 resolution (ScalingRatioHor2=1.5 and ScalingRatioVer2=1.5), and 2/3 resolution (ScalingRatioHor3=1.25 and ScalingRatioVer3=1.25) may each be adjusted to the original resolution (UpscaledOutput=2), and BaseQP and OffsetPSNR may be set to specific values (e.g., 37 and 3), respectively. BasePSNR for RA and AI may be set to specific values (e.g., 46 and 43), respectively. When the image is encoded at 1/2, 2/3, or 4/5 of the original resolution, the QP value may be adjusted by an offset. The QP value may be adjusted based on an offset defined as, -6 for an image with a 1/2 resolution ratio, -4 for an image with a 2/3 resolution ratio, and -2 for an image with a 4/5 resolution ratio. The resolution change ratios for the resolution change candidates described above are one embodiment, and may have a real value within a specific range (e.g., a real value between 2 and 1/8). Further, the resolution change ratio in the horizontal direction and the resolution change ratio in the vertical direction may have the same value or different values.

According to the embodiment of the present disclosure described, one resolution ratio may be selected from among one or more resolution ratio candidates, thereby significantly improving encoding/decoding coding efficiency.

When the resolution is determined according to the above embodiment of the present disclosure, the resolution index information indicating the resolution ratio may be encoded into a bitstream. A corresponding decoder may determine the resolution of the current image based on the received resolution index information. The current image with the changed resolution may be used as a reference image for inter-prediction of subsequent images in decoding order.

Hereinafter, a description will be given of an embodiment of determining a filter used to change the current image to the same size as the original image when the adaptive resolution change technique according to the present disclosure is used.

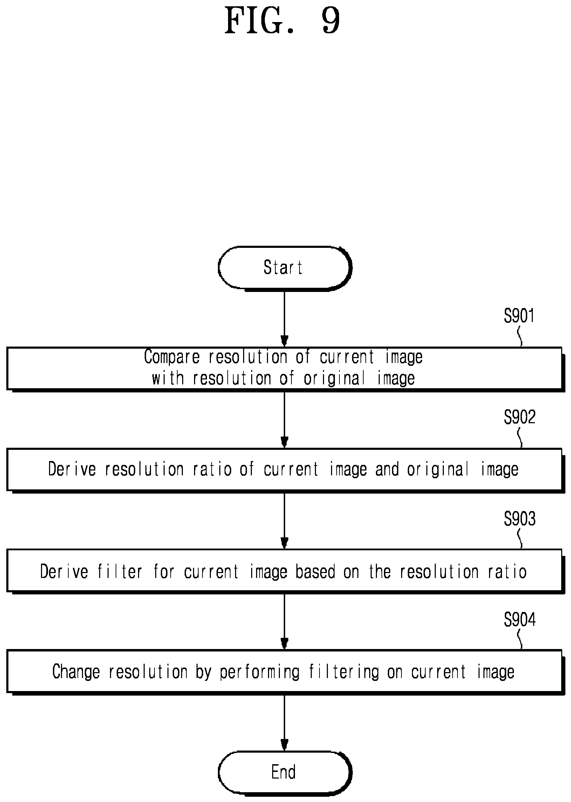

FIG. 9 illustrates an image coding (encoding or decoding) method using filtering according to one embodiment of the present disclosure. More specifically, it illustrates an image coding method using filtering for adaptive resolution change.

When the current image is changed through adaptive resolution change, the size of the original image may differ from that of the current image. The size of the original image may be signaled in a bitstream and may be defined at a certain level (e.g., sequence parameter set (SPS), video parameter set (VPS), picture parameter set (PPS), etc.), and the current image may be determined based on the resolution index information indicating a resolution ratio. In other words, if the size of the original image is different from that of the current image, the current image may need to be changed to a resolution equal to the size of the original image by resampling. Here, the change to the same resolution is intended to display the reconstructed image or using the current image as a reference image for subsequent images. The resampling of the current image may be performed through filtering applied to the current image.

FIG. 20 illustrates, as an example, a method of applying filtering to the current image to perform resampling for the reference picture. First, the resolution of the current image may be compared with that of the original image (S901). When the resolution of the current image is the same as that of the original image, filtering may not be applied to the current image. When the resolution of the current image is different from that of the original image, a resolution ratio of the current image and the original image may be derived (S902). Here, the resolution ratio may be derived as one of multiple resolution ratios. The multiple resolution ratios may be predefined. For example, the multiple resolution ratios may include at least one of 2, 3/2, or 5/4, and may be expressed as as their reciprocals: 1/2, 2/3, or 4/5. Among the multiple resolution ratios, one resolution ratio may be selected based on information (e.g., index information) indicating the resolution ratio signaled in the bitstream. In another example, the selected resolution ratio may be derived based on a quantization parameter or PSNR as described above, rather than the information signaled in the bitstream. Next, a filter for resampling the current image may be derived based on the resolution ratio (S903). Here, the filter may be derived from one of multiple filter sets, and the multiple filter sets may be predefined.

For example, the filter may be derived based on at least one of the filter sets shown in Tables 4 to 9 below.

[Table 4]

| Sub-pixel position | Filter coefficient | | | | | | | |
|---|---|---|---|---|---|---|---|---|
| | fL[ p ][ 0 ] | fL[ p ][ 1 ] | fL[ p ][ 2 ] | fL[ p ][ 3 ] | fL[ p ][ 4 ] | fL[ p ][ 5 ] | fL[ p ][ 6 ] | fL[ p ][ 7 ] |
| 1 | 0 | 1 | -3 | 63 | 4 | -2 | 1 | 0 |
| 2 | -1 | 2 | -5 | 62 | 8 | -3 | 1 | 0 |
| 3 | -1 | 3 | -8 | 60 | 13 | -4 | 1 | 0 |
| 4 | -1 | | -10 | 58 | 17 | -5 | 1 | 0 |
| 5 | -1 | 4 | -11 | 52 | 26 | -8 | 3 | -1 |
| 6 | -1 | 3 | -9 | 47 | 31 | -10 | 4 | -1 |
| 7 | -1 | 4 | -11 | 45 | 34 | -10 | 4 | -1 |
| 8 | -1 | 4 | -11 | 40 | 40 | -11 | 4 | -1 |
| 9 | -1 | 4 | -10 | 34 | 45 | -11 | 4 | -1 |
| 10 | - | 4 | -10 | 31 | 47 | -9 | 3 | -1 |
| 11 | -1 | 3 | -8 | 26 | 52 | -11 | 4 | -1 |
| 12 | 0 | 1 | -5 | 17 | 58 | -10 | 4 | -1 |
| 13 | 0 | 1 | -4 | 13 | 60 | -8 | 3 | -1 |
| 14 | 0 | 1 | -3 | 8 | 62 | -5 | 2 | -1 |
| 15 | 0 | 1 | -2 | 4 | 63 | -3 | 1 | 0 |

[Table 5]

| Sub-pixel position | Filter coefficient | | | | | | | |
|---|---|---|---|---|---|---|---|---|
| | fL[ p ][ 0 ] | fL[ p ][ 1 ] | fL[ p ][ 2 ] | fL[ p ][ 3 ] | fL[ p ][ 4 ] | fL[ p ][ 5 ] | fL[ p ][ 6 ] | fL[ p ][ 7 ] |
| 0 | -1 | -5 | 17 | 42 | 17 | -5 | -1 | 0 |
| 1 | 0 | -5 | 15 | 41 | 19 | -5 | -1 | 0 |
| 2 | 0 | -5 | 13 | 40 | 21 | -4 | -1 | 0 |
| 3 | 0 | -5 | 11 | 39 | 24 | -4 | -2 | 1 |
| 4 | 0 | -5 | 9 | 38 | 26 | -3 | -2 | 1 |
| 5 | 0 | -5 | 7 | 38 | 28 | -2 | -3 | 1 |
| 6 | 1 | -5 | 5 | 36 | 30 | -1 | -3 | 1 |
| 7 | 1 | -4 | 3 | 35 | 32 | 0 | -4 | 1 |
| 8 | 1 | -4 | 2 | 33 | 33 | 2 | -4 | 1 |
| 9 | 1 | -4 | 0 | 32 | 35 | 3 | -4 | 1 |
| 10 | 1 | -3 | -1 | 30 | 36 | 5 | -5 | 1 |
| 11 | 1 | -3 | -2 | 28 | 38 | 7 | -5 | 0 |
| 12 | 1 | -2 | -3 | 26 | 38 | 9 | -5 | 0 |
| 13 | 1 | -2 | -4 | 24 | 39 | 11 | -5 | 0 |
| 14 | 0 | -1 | -4 | 21 | 40 | 13 | -5 | 0 |
| 15 | 0 | -1 | -5 | 19 | 41 | 15 | -5 | 0 |

[Table 6]

| Sub-pixel position | Filter coefficient | | | | | | | |
|---|---|---|---|---|---|---|---|---|
| | fL[ p ][ 0 ] | fL[ p ][ 1 ] | fL[ p ][ 2 ] | fL[ p ][ 3 ] | fL[ p ][ 4 ] | fL[ p ][ 5 ] | fL[ p ][ 6 ] | fL[ p ][ 7 ] |
| 0 | -4 | 2 | 20 | 28 | 20 | 2 | -4 | 0 |
| 1 | -4 | 0 | 19 | 29 | 21 | 5 | -4 | -2 |
| 2 | -4 | -1 | 18 | 29 | 22 | 6 | -4 | -2 |
| 3 | -4 | -1 | 16 | 29 | 23 | 7 | -4 | -2 |
| 4 | -4 | -1 | 16 | 28 | 24 | 7 | -4 | -2 |
| 5 | -4 | -1 | 14 | 28 | 25 | 8 | -4 | -2 |
| 6 | -3 | -3 | 14 | 27 | 26 | 9 | -3 | -3 |
| 7 | -3 | -1 | 12 | 28 | 25 | 10 | -4 | -3 |
| 8 | -3 | -3 | 11 | 27 | 27 | 11 | -3 | -3 |
| 9 | -3 | -4 | 10 | 25 | 28 | 12 | -1 | -3 |
| 10 | -3 | -3 | 9 | 26 | 27 | 14 | -3 | -3 |
| 11 | -2 | -4 | 8 | 25 | 28 | 14 | -1 | -4 |
| 12 | -2 | -4 | 7 | 24 | 28 | 16 | -1 | -4 |
| 13 | -2 | -4 | 7 | 23 | 29 | 16 | -1 | -4 |
| 14 | -2 | -4 | 6 | 22 | 29 | 18 | -1 | -4 |
| 15 | -2 | -4 | 5 | 21 | 29 | 19 | 0 | -4 |

[Table 7]

| Sub-pixel position | Filter coefficient | | | | | | | |
|---|---|---|---|---|---|---|---|---|
| | fL[ p ][ 0 ] | fL[ p ][ 1 ] | fL[ p ][ 2 ] | fL[ p ][ 3 ] | fL[ p ][ 4 ] | fL[ p ][ 5 ] | fL[ p ][ 6 ] | fL[ p ][ 7 ] |
| 1 | 0 | 1 | -3 | 63 | 4 | -2 | 1 | 0 |
| 2 | 0 | 1 | -5 | 62 | 8 | -3 | 1 | 0 |
| 3 | 0 | 2 | -8 | 60 | 13 | -4 | 1 | 0 |
| 4 | 0 | 3 | -10 | 58 | 17 | -5 | 1 | 0 |
| 5 | 0 | 3 | -11 | 52 | 26 | -8 | 2 | 0 |
| 6 | 0 | 2 | -9 | 47 | 31 | -10 | 3 | 0 |
| 7 | 0 | 3 | -11 | 45 | 34 | -10 | 3 | 0 |
| 8 | 0 | 3 | -11 | 40 | 40 | -11 | 3 | 0 |
| 9 | 0 | 3 | -10 | 34 | 45 | -11 | 3 | 0 |
| 10 | 0 | 3 | -10 | 31 | 47 | -9 | 2 | 0 |
| 11 | 0 | 2 | -8 | 26 | 52 | -11 | 3 | 0 |
| 12 | 0 | 1 | -5 | 17 | 58 | -10 | 3 | 0 |
| 13 | 0 | 1 | -4 | 13 | 60 | -8 | 2 | 0 |
| 14 | 0 | 1 | -3 | 8 | 62 | -5 | 1 | 0 |
| 15 | 0 | 1 | -2 | 4 | 63 | -3 | 1 | 0 |

[Table 8]

| Sub-pixel position | Filter coefficient | | | | | | | |
|---|---|---|---|---|---|---|---|---|
| | fL[ p ][ 0 ] | fL[ p ][ 1 ] | fL[ p ][ 2 ] | fL[ p ][ 3 ] | fL[ p ][ 4 ] | fL[ p ][ 5 ] | fL[ p ][ 6 ] | fL[ p ][ 7 ] |
| 0 | 0 | -6 | 17 | 42 | 17 | -5 | -1 | 0 |
| 1 | 0 | -5 | 15 | 41 | 19 | -5 | -1 | 0 |
| 2 | 0 | -5 | 13 | 40 | 21 | -4 | -1 | 0 |
| 3 | 0 | -5 | 11 | 39 | 24 | -4 | -1 | 0 |
| 4 | 0 | -5 | 9 | 38 | 26 | -3 | -1 | 0 |
| 5 | 0 | -5 | 7 | 38 | 28 | -2 | -2 | 0 |
| 6 | 0 | -4 | 5 | 36 | 30 | -1 | -2 | 0 |
| 7 | 0 | -3 | 3 | 35 | 32 | 0 | -3 | 0 |
| 8 | 0 | -3 | 2 | 33 | 33 | 2 | -3 | 0 |
| 9 | 0 | -3 | 0 | 32 | 35 | 3 | -3 | 0 |
| 10 | 0 | -2 | -1 | 30 | 36 | 5 | -4 | 0 |
| 11 | 0 | -2 | -2 | 28 | 38 | 7 | -5 | 0 |
| 12 | 0 | -1 | -3 | 26 | 38 | 9 | -5 | 0 |
| 13 | 0 | -1 | -4 | 24 | 39 | 11 | -5 | 0 |
| 14 | 0 | -1 | -4 | 21 | 40 | 13 | -5 | 0 |
| 15 | 0 | -1 | -5 | 19 | 41 | 15 | -5 | 0 |

[Table 9]

| Sub-pixel position | Filter coefficient | | | | | | | |
|---|---|---|---|---|---|---|---|---|
| | fL[ p ][ 0 ] | fL[ p ][ 1 ] | fL[ p ][ 2 ] | fL[ p ][ 3 ] | fL[ p ][ 4 ] | fL[ p ][ 5 ] | fL[ p ][ 6 ] | fL[ p ][ 7 ] |
| 0 | 0 | -2 | 20 | 28 | 20 | 2 | -4 | 0 |
| 1 | 0 | -4 | 19 | 29 | 21 | 5 | -6 | 0 |
| 2 | 0 | -5 | 18 | 29 | 22 | 6 | -6 | 0 |
| 3 | 0 | -5 | 16 | 29 | 23 | 7 | -6 | 0 |
| 4 | 0 | -5 | 16 | 28 | 24 | 7 | -6 | 0 |
| 5 | 0 | -5 | 14 | 28 | 25 | 8 | -6 | 0 |
| 6 | 0 | -6 | 14 | 27 | 26 | 9 | -6 | 0 |
| 7 | 0 | -4 | 12 | 28 | 25 | 10 | -7 | 0 |
| 8 | 0 | -6 | 11 | 27 | 27 | 11 | -6 | 0 |
| 9 | 0 | -7 | 10 | 25 | 28 | 12 | -4 | 0 |
| 10 | 0 | -6 | 9 | 26 | 27 | 14 | -6 | 0 |
| 11 | 0 | -6 | 8 | 25 | 28 | 14 | -5 | 0 |
| 12 | 0 | -6 | 7 | 24 | 28 | 16 | -5 | 0 |
| 13 | 0 | -6 | 7 | 23 | 29 | 16 | -5 | 0 |
| 14 | 0 | -6 | 6 | 22 | 29 | 18 | -5 | 0 |
| 15 | 0 | -6 | 5 | 21 | 29 | 19 | -4 | 0 |

The filter coefficients shown in Tables 4 to 9 above show examples in which the filters are defined at 1/16 sub-pixel intervals. Among these filters, the filter for the current image may be derived based on the resolution ratio. Alternatively, the filter index for the current image may be encoded and included in a bitstream. Alternatively, the encoder may calculate the filter coefficient values directly, and signal the filter coefficient for each sub-pixel position. When signaling the filter coefficients, additional information such as the precision of the filter coefficients, the number of filter coefficients, the number of filter taps, and whether the filter is a vertical or horizontal filter may be signaled.

In another embodiment, multiple filters may be derived based on Tables 10 to 12. Tables 10 to 12 illustrate examples of filters for the case where the filters defined at 1/32 sub-pixel intervals.

[Table 10]

| Sub-pixel position | Filter coefficient | | | |
|---|---|---|---|---|
| | fC[ p ][ 0 ] | fC[ p ][ 1 ] | fC[ p ][ 2 ] | fC[ p ][ 3 ] |
| 1 | -1 | 63 | 2 | 0 |
| 2 | -2 | 62 | 4 | 0 |
| 3 | -2 | 60 | 7 | -1 |
| 4 | -2 | 58 | 10 | -2 |
| 5 | -3 | 57 | 12 | -2 |
| 6 | -4 | 56 | 14 | -2 |
| 7 | -4 | 55 | 15 | -2 |
| 8 | -4 | 54 | 16 | -2 |
| 9 | -5 | 53 | 18 | -2 |
| 10 | -6 | 52 | 20 | -2 |
| 11 | -6 | 49 | 24 | -3 |
| 12 | -6 | 46 | 28 | -4 |

(continued)

| Sub-pixel position | Filter coefficient | | | |
|---|---|---|---|---|
| | fC[ p ][ 0 ] | fC[ p ][ 1 ] | fC[ p ][ 2 ] | fC[ p ][ 3 ] |
| 1 | -5 | 44 | 29 | -4 |
| 14 | -4 | 42 | 30 | -4 |
| 15 | -4 | 39 | 33 | -4 |
| 16 | -4 | 36 | 36 | -4 |
| 17 | -4 | 33 | 39 | -4 |
| 18 | -4 | 30 | 42 | -4 |
| 19 | -4 | 29 | 44 | -5 |
| 20 | -4 | 28 | 46 | -6 |
| 21 | -3 | 24 | 49 | -6 |
| 22 | -2 | 20 | 52 | -6 |
| 23 | -2 | 18 | 53 | -5 |
| 24 | -2 | 16 | 54 | -4 |
| 25 | -2 | 15 | 55 | -4 |
| 26 | -2 | 14 | 56 | -4 |
| 27 | -2 | 12 | 57 | -3 |
| 28 | -2 | 10 | 58 | -2 |
| 2 | -1 | 7 | 60 | -2 |
| 30 | 0 | 4 | 62 | -2 |
| 31 | 0 | 2 | 63 | -1 |

[Table 11]

| Sub-pixel position | Filte □ coefficient | | | |
|---|---|---|---|---|
| | fC[ p ][ 0 ] | fC[ p ][ 1 ] | fC[ p ][ 2 ] | fC[ p ][ 3 ] |
| 0 | 12 | 40 | 12 | 0 |
| 1 | 11 | 40 | 13 | 0 |
| 2 | 10 | 40 | 15 | -1 |
| 3 | 9 | 40 | 16 | -1 |
| 4 | 8 | 40 | 17 | -1 |
| 5 | 8 | 39 | 18 | -1 |
| 6 | 7 | 39 | 19 | -1 |
| 7 | 6 | 38 | 21 | -1 |
| 8 | | 38 | 22 | -1 |
| 9 | 4 | 38 | 23 | -1 |
| 10 | 4 | 37 | 24 | -1 |
| 11 | 3 | 36 | 25 | 0 |
| 12 | 3 | 35 | 26 | 0 |
| 13 | | 34 | 28 | 0 |
| 14 | 2 | 33 | 29 | 0 |

(continued)

| Sub-pixel position | Filter coefficient | | | |
|---|---|---|---|---|
| | fC[ p ][ 0 ] | fC[ p ][ 1 ] | fC[ p ][ 2 ] | fC[ p ][ 3 ] |
| 15 | 1 | 33 | 30 | 0 |
| 16 | 1 | 31 | 31 | 1 |
| 17 | 0 | 30 | 33 | 1 |
| 18 | 0 | 29 | 33 | 2 |
| 19 | 0 | 28 | 34 | 2 |
| 20 | 0 | 26 | 35 | 3 |
| 21 | 0 | 25 | 36 | 3 |
| 22 | -1 | 24 | 37 | 4 |
| 23 | -1 | 23 | 38 | 4 |
| 24 | -1 | 22 | 38 | 5 |
| 25 | -1 | 21 | 38 | 6 |
| 2 | -1 | 19 | 39 | 7 |
| 27 | -1 | 18 | 39 | 8 |
| 28 | -1 | 17 | 40 | 8 |
| 29 | -1 | 16 | 40 | 9 |
| 30 | -1 | 15 | 40 | 1 |
| 31 | 0 | 13 | 40 | 11 |

[Table 12]

| Sub-pixel position | Filter coefficient | | | |
|---|---|---|---|---|
| | fC[ p ][ 0 ] | fC[ p ][ 1 ] | fC[ p ][ 2 ] | fC[ p ][ 3 ] |
| 0 | 17 | 0 | 17 | 0 |
| 1 | 17 | 30 | 18 | 1 |
| 2 | 16 | 30 | 18 | 0 |
| 3 | 16 | 30 | 18 | 0 |
| 4 | 15 | 30 | 18 | 1 |
| 5 | 14 | 30 | 18 | 2 |
| 6 | 13 | 29 | 19 | 3 |
| 7 | 13 | 29 | 19 | 3 |
| 8 | 12 | 29 | 20 | 3 |
| 9 | 11 | 28 | 21 | 4 |
| 10 | 10 | 28 | 22 | 4 |
| 11 | 10 | 27 | 22 | 5 |
| 12 | 9 | 27 | 23 | 5 |
| 13 | 9 | 26 | 24 | 5 |
| 14 | 8 | 26 | 24 | 6 |
| 15 | 7 | 26 | 25 | 6 |
| 16 | 7 | 25 | 25 | 7 |

(continued)

| Sub-pixel position | Filter coefficient | | | |
|---|---|---|---|---|
| | fC[ p ][ 0 ] | fC[ p ][ 1 ] | fC[ p ][ 2 ] | fC[ p ][ 3 ] |
| 17 | 6 | 25 | 26 | 7 |
| 18 | 6 | 24 | 26 | 8 |
| 19 | 5 | 24 | 26 | 9 |
| 20 | 5 | 23 | 27 | 9 |
| 21 | 5 | 22 | 27 | 10 |
| 22 | 4 | 22 | 28 | 10 |
| 23 | 4 | 21 | 28 | 11 |
| 24 | 3 | 20 | 29 | 12 |
| 25 | 3 | 19 | 29 | 13 |
| 26 | 3 | 19 | 29 | 13 |
| 27 | 2 | 18 | 30 | 14 |
| 28 | 1 | 18 | 30 | 15 |
| 29 | 0 | 18 | 30 | 16 |
| 30 | 0 | 18 | 30 | 16 |
| 31 | 1 | 18 | 30 | 17 |

Finally, according to FIG. 9, the resolution is changed by performing filtering on the current image (S904). In other words, reference picture resampling may be performed by filtering on the current image. That is, filtering may be performed on the current image using the determined filter coefficients, whereby reference picture resampling may be performed on the current image, that is, the current picture. In each pixel unit of the current image, a ratio between the current image and the original image may be calculated to derive a sub-pixel position for each pixel.

The change of the image to the resolution of the original image through the filtering process applied to the current image may be performed outside the codec for display. Alternatively, the image changed to the resolution of the original image through the filtering process applied to the current image may be used as a reference image for the images that follow the current image in decoding order.

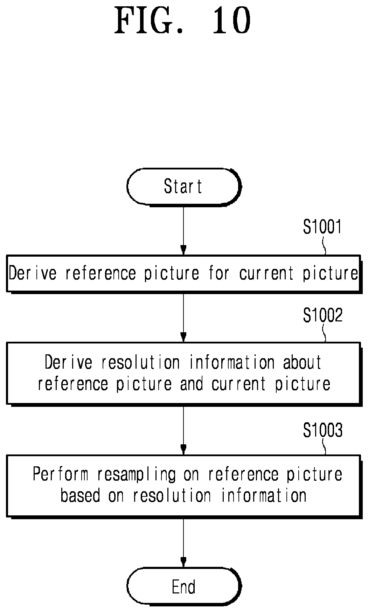

FIG. 10 illustrates an image decoding method according to one embodiment of the present disclosure.

In one example, the image decoding method may be performed by an image decoding apparatus and may be based on the embodiments described above.

In one example, a reference picture for the current picture may be derived (S1001). Then, resolution information about the reference picture and the current picture may be derived (S1002), and resampling of the reference picture may be performed for the current picture based on the resolution information (S1003). In one example, the resolution information may be acquired from a bitstream. In one example, the resolution information may include a resolution index for a resolution list. In one example, the resolution information may include a resolution ratio between the current picture and the reference picture. The resolution ratio may be determined as one of a plurality of predefined resolution ratios. Further, the resolution information may be a value derived based on a peak signal to noise ratio (PSNR) threshold. Further, the resampling of the reference picture may be performed by a filter for the current picture. The filter may be determined based on the resolution information, but may be determined as one of filters included in a filter set including multiple predefined filters. Alternatively, in one example, the filter may be determined by a filter index signaled in the bitstream. Description of other details that are the same as those described above is skipped.

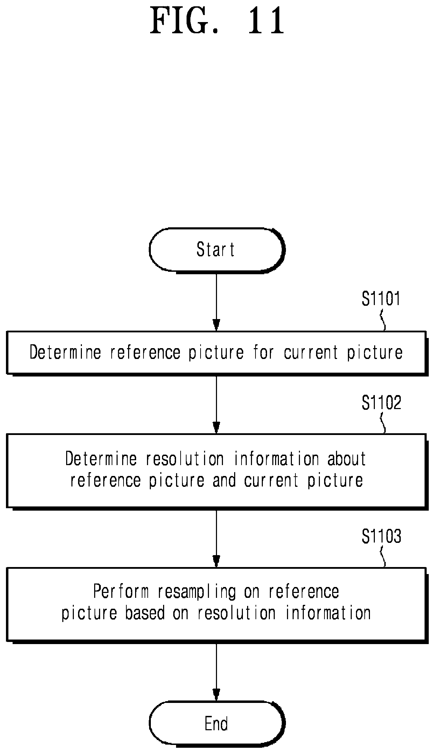

FIG. 11 illustrates an image encoding method according to one embodiment of the present disclosure. In one example, the image encoding method of FIG. 11 may be performed by an image encoding apparatus and may be based on the embodiments described above.

First, a reference picture for the current picture may be determined (S1101). Then, resolution information about the reference picture and the current picture may be determined (S1102). Further, based on the resolution information, resampling of the reference picture may be performed for the current picture (S1103). In one example, the resolution information may include a resolution index for a resolution list. In one example, the resolution information may include a resolution ratio between the current picture and the reference picture. In one example, the resolution information may be a value derived based on a PSNR threshold. Further, the resampling of the reference picture may be performed by a filter for the current picture. The filter may be determined based on the resolution information, but may be determined as one of filters included in a filter set including multiple predefined filters. Alternatively, in one example, the filter may be determined by a filter index encoded in the bitstream. Description of other details that are the same as those described above is skipped.

According to the present disclosure, adaptive resolution change may be enabled, thereby improving coding quality and enhancing coding efficiency.

Various embodiments of the present disclosure may be used individually or in combination with other embodiments.

While the exemplary methods of the present disclosure described above are represented as a series of operations for clarity of description, it is not intended to limit the order in which the operations are performed, and the operations may be performed simultaneously or in different order as necessary. In order to implement the method according to the present disclosure, the described operations may further include other operations, may include remaining operations except for some of the operations, or may include other additional operations except for some operations.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or two or more thereof may be applied in combination.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a Blu-ray player, an Internet access TV, a home theater system, a smartphone, a tablet PC, a digital video recorder (DVR), or the like.

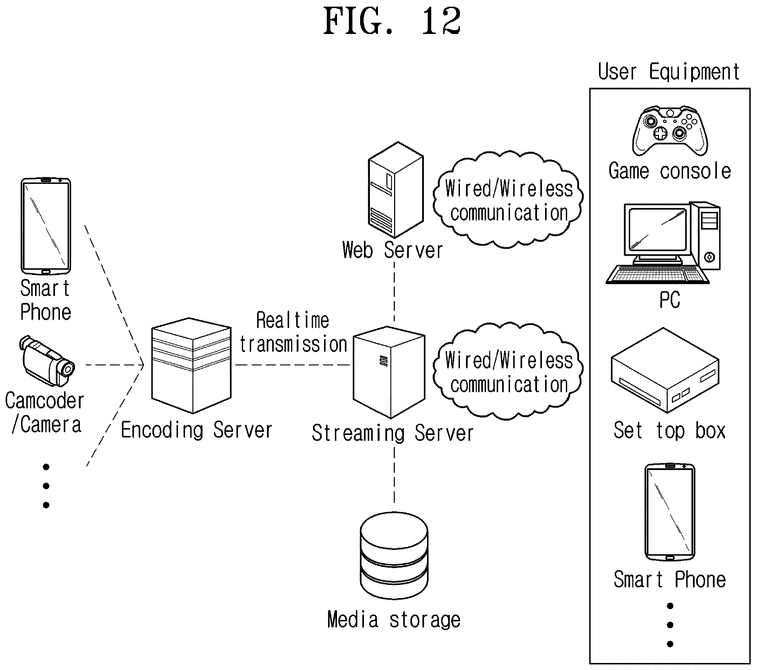

FIG. 12 is a diagram illustrating a content streaming system to which embodiments of the present disclosure are applicable.

As shown in FIG. 12, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user devices may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable instructions (e.g., an operating system, an application, firmware, a program, etc.) for enabling operations according to the methods of various embodiments to be executed on an apparatus or a computer, a non-transitory computer-readable medium having such software or instructions stored thereon and executable on the apparatus or the computer.

[Industrial Applicability]

The embodiments of the present disclosure may be used in encoding or decoding images.

**Claims**

1. An image decoding method performed by an image decoding apparatus, the method comprising:

    deriving a reference picture for a current picture;
    deriving resolution information about the reference picture and the current picture; and
    performing resampling of the reference picture for the current picture based on the resolution information.

2. The method of claim 1, wherein the resolution information comprises a resolution index for a resolution list.

3. The method of claim 1, wherein the resolution information comprises a resolution ratio between the current picture and the reference picture.

4. The method of claim 1, wherein the resolution information is signaled in a bitstream.

5. The method of claim 1, wherein the resolution ratio is determined as one of a plurality of predefined resolution ratios.

6. The method of claim 1, wherein the resolution information is a value derived based on a Peak Signal to Noise Ratio (PSNR) threshold.

7. The method of claim 1, wherein the resampling of the reference picture is performed by a filter for the current picture.

8. The method of claim 7, wherein the filter is determined based on the resolution information,
    wherein the filter is determined as a filter in a filter set comprising a plurality of predefined filters.

9. The method of claim 7, wherein the filter is determined by a filter index signaled in a bitstream.

10. An image encoding method performed by an image encoding apparatus, the method comprising:

    determining a reference picture for a current picture;
    determining resolution information about the reference picture and the current picture; and
    performing resampling of the reference picture for the current picture based on the resolution information.

11. The method of claim 10, wherein the resolution information comprises a resolution index for a resolution list.

12. The method of claim 10, wherein the resolution information is a value derived based on a Peak Signal to Noise Ratio (PSNR) threshold.

13. The method of claim 10, wherein the resampling of the reference picture is performed by a filter for the current picture.

14. A computer-readable recording medium storing a bitstream generated by the image encoding method of claim 10.

15. A method of transmitting a bitstream, the method comprising:

transmitting a bitstream generated by the image encoding method,
wherein the image encoding method comprises:

determining a reference picture for a current picture;
determining resolution information about the reference picture and the current picture; and
performing resampling of the reference picture for the current picture based on the resolution information.

# FIG. 1

# FIG. 2

EP 4 604 537 A1

# FIG. 3

# FIG. 4

Start

S1000

Perform prediction (determine inter prediction mode, Derive motion information, and generate prediction samples)

S1010

Derive residual samples based on prediction samples

S1020

Encode image information including prediction Information and residual information

End

# FIG. 5

180

181

Original picture →

Prediction mode
determination unit

→ Prediction mode information
Information related to motion information →

182

Motion information deriver

Reference picture →

→ Prediction sample →

183

Prediction sample deriver

Inter-predictor

# FIG. 6

```
                    ┌─────────┐
                    │  Start  │
                    └─────────┘
                         │
                         │            S1100
                         ▼
    ┌───────────────────────────────────────────┐
    │   Determine prediction mode for current block │
    │   Based on received prediction information    │
    └───────────────────────────────────────────┘
                         │
                         │            S1110
                         ▼
    ┌───────────────────────────────────────────┐
    │        DERIVE MOTION INFORMATION           │
    └───────────────────────────────────────────┘
                         │
                         │            S1120
                         ▼
    ┌───────────────────────────────────────────┐
    │  Perform prediction (generate prediction samples) │
    └───────────────────────────────────────────┘
                         │
                         │            S1130
                         ▼
    ┌───────────────────────────────────────────┐
    │          Derive residual samples           │
    │        Based on residual information       │
    └───────────────────────────────────────────┘
                         │
                         │            S1140
                         ▼
    ┌───────────────────────────────────────────┐
    │          Reconstruct picture based on      │
    │     Prediction samples and residual samples │
    └───────────────────────────────────────────┘
                         │
                         ▼
                    ┌─────────┐
                    │   End   │
                    └─────────┘
```

# FIG. 7

260

261

Prediction mode
determination unit → Prediction mode determination unit

262

Motion information deriver → Prediction sample

Reference picture →

263

Prediction sample deriver

Inter-predictor

# FIG. 8

```
          ┌──────────────┐
          │    Start     │
          └──────┬───────┘
                 │            S1200
                 ▼
   ┌─────────────────────────────────┐
   │  Determine inter prediction mode │
   └─────────────────┬───────────────┘
                     │            S1210
                     ▼
   ┌─────────────────────────────────┐
   │     Derive motion information    │
   └─────────────────┬───────────────┘
                     │            S1220
                     ▼
   ┌─────────────────────────────────┐
   │        Perform prediction        │
   │   (generate prediction samples)  │
   │    Based on motion information   │
   └─────────────────┬───────────────┘
                     │
                     ▼
          ┌──────────────┐
          │     End      │
          └──────────────┘
```

# FIG. 9

```
                    ┌─────────┐
                    │  Start  │
                    └─────────┘
                         │
                         ▼                              S901
┌────────────────────────────────────────────────────────┐
│         Compare resolution of current image             │
│           with resolution of original image             │
└────────────────────────────────────────────────────────┘
                         │
                         ▼                              S902
┌────────────────────────────────────────────────────────┐
│    Derive resolution ratio of current image and original image │
└────────────────────────────────────────────────────────┘
                         │
                         ▼                              S903
┌────────────────────────────────────────────────────────┐
│   Derive filter for current image based on the resolution ratio │
└────────────────────────────────────────────────────────┘
                         │
                         ▼                              S904
┌────────────────────────────────────────────────────────┐
│   Change resolution by performing filtering on current image │
└────────────────────────────────────────────────────────┘
                         │
                         ▼
                    ┌─────────┐
                    │   End   │
                    └─────────┘
```

# FIG. 10

Start

S1001

Derive reference picture for current picture

S1002

Derive resolution information about
reference picture and current picture

S1003

Perform resampling on reference picture
based on resolution information

End

# FIG. 11

```
                        ┌──────────┐
                        │  Start   │
                        └────┬─────┘
                             │                    S1101
                             ▼
   ┌─────────────────────────────────────────────────┐
   │   Determine reference picture for current picture │
   └─────────────────────────┬───────────────────────┘
                             │                    S1102
                             ▼
   ┌─────────────────────────────────────────────────┐
   │      Determine resolution information about       │
   │       reference picture and current picture       │
   └─────────────────────────┬───────────────────────┘
                             │                    S1103
                             ▼
   ┌─────────────────────────────────────────────────┐
   │          Perform resampling on reference          │
   │    picture based on resolution information        │
   └─────────────────────────┬───────────────────────┘
                             │
                             ▼
                        ┌──────────┐
                        │   End    │
                        └──────────┘
```

# FIG. 12

User Equipment

Game console

PC

Set top box

Smart Phone

Smart Phone

Camcoder /Camera

Encoding Server

Realtime transmission

Streaming Server

Web Server

Wired/Wireless communication

Wired/Wireless communication

Media storage

EP 4 604 537 A1

## INTERNATIONAL SEARCH REPORT

| International application No. |
| --- |
| **PCT/KR2023/015713** |

| A. | CLASSIFICATION OF SUBJECT MATTER |
| --- | --- |

**H04N 19/587**(2014.01)i; **H04N 19/105**(2014.01)i; **H04N 19/70**(2014.01)i; **H04N 19/146**(2014.01)i; **H04N 19/117**(2014.01)i

According to International Patent Classification (IPC) or to both national classification and IPC

| B. | FIELDS SEARCHED |
| --- | --- |

Minimum documentation searched (classification system followed by classification symbols)

H04N 19/587(2014.01); H04N 19/105(2014.01); H04N 19/132(2014.01); H04N 19/46(2014.01); H04N 19/513(2014.01); H04N 19/59(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 현재 픽처(current picture), 참조 픽처(reference picture), 해상도 (resolution), 리샘플링(resampling)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2022-0024659 A (ALIBABA GROUP HOLDING LIMITED) 03 March 2022 (2022-03-03) See paragraphs [0019], [0038], [0040], [0049], [0129] and [0131]-[0138]; claims 1 and 8-9; and figures 1 and 12. | 1-15 |
| A | KR 10-2022-0049018 A (LG ELECTRONICS INC.) 20 April 2022 (2022-04-20) See paragraphs [0011]-[0024]; and claims 1-12. | 1-15 |
| A | WO 2021-233404 A1 (BEIJING BYTEDANCE NETWORK TECHNOLOGY CO., LTD. et al.) 25 November 2021 (2021-11-25) See paragraphs [0004]-[0013]; and claims 1-3. | 1-15 |
| A | US 2022-0217382 A1 (BEIJING BYTEDANCE NETWORK TECHNOLOGY CO., LTD. et al.) 07 July 2022 (2022-07-07) See paragraphs [0004]-[0012]; and claims 1-10. | 1-15 |
| A | KR 10-2022-0006120 A (HUAWEI TECHNOLOGIES CO., LTD.) 14 January 2022 (2022-01-14) See paragraphs [0004]-[0031]; and claims 1-7. | 1-15 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 January 2024** | **18 January 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | International application No.<br>**PCT/KR2023/015713** | | | |
|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| KR | 10-2022-0024659 | A | 03 March 2022 | CN | 114128262 | A | 01 March 2022 |
| | | | | EP | 3981155 | A1 | 13 April 2022 |
| | | | | JP | 2022-539657 | A | 13 September 2022 |
| | | | | US | 11190781 | B2 | 30 November 2021 |
| | | | | US | 2022-0086469 | A1 | 17 March 2022 |
| | | | | WO | 2020-263499 | A1 | 30 December 2020 |
| KR | 10-2022-0049018 | A | 20 April 2022 | CN | 114731428 | A | 08 July 2022 |
| | | | | JP | 2022-548704 | A | 21 November 2022 |
| | | | | US | 11516475 | B2 | 29 November 2022 |
| | | | | US | 2023-0089062 | A1 | 23 March 2023 |
| | | | | WO | 2021-054676 | A1 | 25 March 2021 |
| WO | 2021-233404 | A1 | 25 November 2021 | CN | 115699732 | A | 03 February 2023 |
| | | | | CN | 115699756 | A | 03 February 2023 |
| | | | | EP | 4140138 | A1 | 01 March 2023 |
| | | | | JP | 2023-526372 | A | 21 June 2023 |
| | | | | KR | 10-2023-0012507 | A | 26 January 2023 |
| | | | | US | 11825124 | B2 | 21 November 2023 |
| | | | | US | 2023-0082583 | A1 | 16 March 2023 |
| | | | | WO | 2021-233403 | A1 | 25 November 2021 |
| US | 2022-0217382 | A1 | 07 July 2022 | BR | 112022002687 | A2 | 27 September 2022 |
| | | | | CN | 113056915 | A | 29 June 2021 |
| | | | | EP | 3997877 | A1 | 18 May 2022 |
| | | | | JP | 2022-507590 | A | 18 January 2022 |
| | | | | JP | 7319365 | B2 | 01 August 2023 |
| | | | | KR | 10-2022-0043109 | A | 05 April 2022 |
| | | | | US | 11695946 | B2 | 04 July 2023 |
| | | | | US | 2021-0274188 | A1 | 02 September 2021 |
| | | | | WO | 2021-052507 | A1 | 25 March 2021 |
| KR | 10-2022-0006120 | A | 14 January 2022 | CN | 113826399 | A | 21 December 2021 |
| | | | | CN | 115314708 | A | 08 November 2022 |
| | | | | EP | 3963888 | A1 | 09 March 2022 |
| | | | | JP | 2022-533354 | A | 22 July 2022 |
| | | | | JP | 7359873 | B2 | 11 October 2023 |
| | | | | MX | 2021013978 | A | 01 April 2022 |
| | | | | US | 2022-0046271 | A1 | 10 February 2022 |
| | | | | WO | 2020-232269 | A1 | 19 November 2020 |

Form PCT/ISA/210 (patent family annex) (July 2022)